(19) Europäisches Patentamt
European Patent Office
Office européen des brevets

(11) **EP 3 913 875 B1**

(12) **EUROPEAN PATENT SPECIFICATION**

(45) Date of publication and mention
of the grant of the patent:
**05.06.2024 Bulletin 2024/23**

(21) Application number: **20176048.5**

(22) Date of filing: **22.05.2020**

(51) International Patent Classification (IPC):
**H04L 25/02** *(2006.01)*   *H04L 7/04* *(2006.01)*
**H04L 27/26** *(2006.01)*   *H04L 25/03* *(2006.01)*

(52) Cooperative Patent Classification (CPC):
**H04L 25/024; H04J 3/0608;** H04L 7/042;
H04L 25/03019; H04L 27/2663

(54) **JOINT SYNCHRONIZATION AND EQUALIZER INITIALIZATION FOR DOWNSTREAM PON**

GEMEINSAME SYNCHRONISATIONS- UND ENTZERRERINITIALISIERUNG FÜR NACHGESCHALTETES PON

SYNCHRONISATION DE JOINT ET INITIALISATION D'ÉGALISEUR POUR PON EN AVAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.11.2021 Bulletin 2021/47**

(73) Proprietor: **Nokia Solutions and Networks Oy 02610 Espoo (FI)**

(72) Inventors:
• **TSIAFLAKIS, Paschalis 2018 Antwerp (BE)**
• **LANNEER, Wouter 2018 Antwerpen (BE)**
• **LEFEVRE, Yannick 2018 Antwerpen (BE)**

(74) Representative: **IP HILLS NV Bellevue 5/501 9050 Gent-Ledeberg (BE)**

(56) References cited:
CN-A- 110 048 983     US-A1- 2014 056 583
US-A1- 2015 319 028     US-A1- 2018 302 183

## Description

### Technical Field

Various example embodiments relate to the field of telecommunication. In particular, embodiments of the invention relate to a method and system for downstream transmission in Passive Optical Networks, abbreviated PONs, used to deliver broadband access from an Optical Line Termination, abbreviated OLT, to Optical Network Units, abbreviated ONUs, along dispersive optical communication channels.

### Background

Passive Optical Networks, referred to as PONs, have a Point-To-MultiPoint topology, also referred to as P2MP topology, in which one Optical Line Termination, abbreviated OLT, at the network side is used to connect to one or more Optical Network Units, abbreviated ONUs, at the user side by means for example of an Optical Distribution Network, abbreviated ODN or a fibre plant which comprises optical fibres and splitters but no active components. It is noted that, pertaining to the present disclosure, the terminology ONU and ONT for Optical Network Terminal may be used interchangeably. Most PON technologies such as Gigabit PON, Ethernet PON, or XGS-PON which can support higher speed 10 Gbps symmetrical data transfer, are Time-Division Multiplexing, or TDM, PON technologies, in which the fibre medium is shared in time between the different ONUs. Also, Time-Division and Wavelength-Division Multiplexing, or TDWM, PON technologies exist, such as for example NG-PON2, in which multiple TDM systems at different wavelength are stacked on the same PON system. Examples of PONs are for example described in US2014/0056583, CN110048983 and US2016/0006510. US2014/0056583 describes a method for symbol synchronization in optical orthogonal frequency division multiplexing transmission systems and aims at using symbol DC offset signalling to enable symbol alignment. CN110048983 describes a synchronization method of an intensity modulation direct detection orthogonal frequency division multiplexing passive optical network receiver and aims at avoiding the influence of the correlation peak value on a distance factor. US2016/0006510 aims at reducing the power consumption of Digital-Signal-Processing-base reception in time-division multiplexing passive optical networks.

PON receivers can employ bandwidth-limited reception to limit the associated costs. For example, 50G PON could be received using 25G optics, whereas 25G PON could be received using 10G optics. Such bandwidth limited reception can introduce significant Inter-Symbol-Interference, abbreviated ISI, i.e., the received samples not only depend on the corresponding transmitted symbol but are also affected by the previous and/or following transmitted symbols. In addition, due to the increased line rate speeds, higher-speed PON systems are likely more strongly affected by chromatic dispersion due to the fibre propagation. Even if for these systems the operating wavelength is moved closer to the 0-dispersion wavelength compared to 10G systems, the large frequency content of the 50G signals creates a very strong dispersion impact at 50G, leading to even more ISI.

### Summary

While for previous lower-rate PON technologies, ISI was minimal and could easily be dealt with or even neglected, this does not hold anymore for the higher-rate PON systems due to the reasons listed above, i.e. bandwidth limited reception and chromatic dispersion. As a result, to recover the transmitted symbols that are corrupted by ISI and enable reliable communication, next-generation PON technologies envisage the use of an electrical analog-to-digital converter at the receiver side in combination with Digital Signal Processing-, or DSP-, based channel equalization techniques. It is important to note that the bit error rate before channel equalization will be much higher than afterwards.

Channel equalization is a well-known DSP technique to mitigate ISI in digital communication systems. A near-optimal approach consists of Maximum Likelihood Sequence Estimation or MLSE in case of a hard-output equalizer or Bahl-Cocke-Jelinek-Raviv equalizer in case of a soft-output equalizer. However, the computational complexity of this approach grows exponentially with the length of the channel's impulse response. A suboptimal approach consists of applying a linear transversal filter to the received sample sequence. This filter structure has a computational complexity that grows linearly with the length of the channel's impulse response and is commonly referred to as a FeedForward Equalizer, also known as FFE. An alternative equalizer that is commonly used is the Decision Feedback Equalizer or DFE, which is a nonlinear equalizer. It employs both a feedforward and feedback filter. The input to the feedforward filter is the received sample sequence, whereas the feedback filter has as its input the sequence of decisions on previously equalized received samples.

In next-generation PON systems, like many other communication systems that employ equalizers, the complete channel characteristics are unknown a priori by the ONU. In addition, the channel response varies overtime. Hence, the equalizers of the ONU must be adapted or trained to the specific channel response, as well as continuously adapted to the variations over time of the channel response. Generally, an ONU can adapt its equalizer coefficients using two methods: a pilot-based method and a decision directed method.

With the pilot-based method, the equalizer can be trained based on a pilot sequence or training sequence of transmitted signals that is known a priori at the ONU. The known training sequence can be exploited in two ways. It can be used to estimate the channel impulse response, after which the equalizer, such as the MLSE or FFE/DFE can be configured to compensate for the estimated channel impulse response. For instance the FFE/DFE coefficients can be adapted to the channel using a closed-form expression. Alternatively, the FFE/DFE coefficients can be directly estimated from the corresponding received symbol sequence by for instance adapting them to minimize the output error based on the least mean squares algorithm. The accuracy of the equalizer estimation improves with the length of the known training sequence.

In the decision directed method, a decision device is applied to the output of the equalizer to estimate the transmitted symbols. The equalizer is then trained under the assumption that the estimated symbols have been truly transmitted. If the output of the decision device is sufficiently often correct, i.e. if for example the bit error rate is sufficiently low, the equalizer will still converge to an optimal solution. With this method the equalizer can be trained on random, i.e. for example not a priori known, transmitted symbols. This is called blind or decision-directed mode of adaptation. However, it is important to emphasize that if the output of the decision device is too often incorrect, i.e. for example the bit error rate is too high, due to for instance initializing with inaccurate equalizer coefficients, then the equalizer coefficients may converge to a suboptimal solution in decision-directed mode, resulting in possibly poor channel equalization performance. The obvious benefit of decision-directed mode is that it can operate during data transmission, in contrast to training mode which requires transmitting a priori known training bit sequences instead of random transmitted symbols corresponding data. The pilot-based method thus requires transmission overhead which is not the case for the decision-directed mode. The decision- directed method is in addition applicable to certain types of equalizers, such as the FFE and DFE. For other types of equalizers such as MLSE and BCJR equalizers, accurate channel estimation is required, while blind training methods are not straightforward in practice.

When a new ONU initializes, the ONU needs to time synchronize with the OLT and to adapt its channel equalizer coefficients to the channel impulse response. Alternatively, when a new ONU initializes, the ONU adapts its channel equalizer coefficients to the channel impulse response and then synchronizes with the OLT. As will be further explained, the current envisaged strategy in PON to tackle both problems separately results in a causality dilemma when decision-directed methods are not applicable or fail.

In conventional downstream PON transmission, the OLT is continuously broadcasting to all the ONUs due to the Point-To-MultiPoint topology. The transmitted data stream is organized in physical frames, abbreviated PHY frames. For International Telecommunications Union PON technologies, a PHY frame comprises a downstream Physical Synchronization Block, also referred to as PSBd. A PHY frame further comprises data payload following the PSBd in the PHY frame. Different PHY frames are transmitted sequentially, one after the other, from the OLT to the ONU. An ONU can only decode this data stream if it is properly time synchronized with the OLT. In other words, an ONU can only decode this data stream if it knows where the beginning of each PHY frame is in the received symbol sequence of the corresponding PHY frame. For this purpose, the PSBd comprises a known standardized bit-pattern called PSync. By locating this known standardized bit-pattern, an ONU can determine the beginning of the PHY frame. Hence, when an ONU initializes or after losing synchronization, it will start in the so-called hunt state, during which the new ONU will scan through the PHY frame looking for the sequence of received bits that matches the known standardized bit-pattern of the Psync pattern up to a few errors.

The currently known time synchronization scheme to find the location of the PSync in the bit sequence corresponds to finding a match of the Psync pattern up to a few errors in the output of the decision device. This scheme originates from legacy PON technologies, like XGS-PON or NG-PON2, which operate in non-dispersive optical channels without significant ISI. The scheme operates without any equalization and corresponds to the following subsequent operations for each received sample:

- make a hard decision on the current received sample in order to output a bit value;
- compare the hard-decisions of the last received samples to the PSync known standardized bit-pattern, and count the number of errors, i.e., the number of mismatches between the hard-decisions and the corresponding PSync symbol entries;
- the exact PSync known standardized bit-pattern match solution derives a synchronization if there are no errors, whereas the non-exact PSync known standardized bit-pattern match solution derives a synchronization if there are less than K errors, with for example K=4.

The performance of these PSync pattern matching procedures are often analysed for an Additive White Gaussian Noise channel, also referred to as AWGN, i.e., with additive noise with a Gaussian distribution being the only impairment besides the channel attenuation. Since AWGN is a random impairment, there is always a nonzero probability for detecting an exact match. However, this scheme fails to operate under PON channels with severe ISI and/or under harsh noise environments. Indeed, under certain ISI conditions, the non-random ISI impairment can make the probability of an exact PSync match equal to negligibly small. In addition, for the non-exact PSync match procedure, severe ISI will typically result in an error count that is larger than the typical threshold value considered by a non-exact PSync match procedure, resulting in an increased number of false synchronizations. In the presence of ISI, it will only work correctly by operating on the equalized samples while having a properly trained equalizer, so that most of the information bits corrupted by ISI can be recovered.

To solve this, the equalizer could first be trained using a decision directed method on the random transmitted data symbols, before applying the previously described PSync pattern matching procedure. However, as explained previously, under certain ISI conditions, such decision directed methods could lead to a poor BER, thus making it infeasible to synchronize using the PSync pattern matching procedure. In addition, the decision directed methods are not applicable for certain types of equalizers.

Instead of directly using a decision directed method, it could be necessary to first initialize the equalizer coefficients using a pilot-based method. Here the PSync can be used as the pilot, as it is an a priori known sequence of transmitted symbols. However, the pilot-based methods can only be used if the location of the PSync in the stream of received symbols is known, or in other words after the ONU is time synchronized with the OLT.

It is thus an object of embodiments of the present invention to propose an ONU and a method which do not show the inherent shortcomings of the prior art. More specifically, it is an object of embodiments of the present invention to propose an ONU and a method to synchronize the ONU to the OLT for a dispersive optical communication channel.

The scope of protection sought for various embodiments of the invention is set out by the independent claims.

The embodiments and features described in this specification that do not fall within the scope of the independent claims, if any, are to be interpreted as examples useful for understanding various embodiments of the invention.

There is a need for solving the causality dilemma mentioned above.

Amongst others, it is an object of embodiments of the invention to implement an ONU and develop a method for to time synchronize the ONU with the OLT, while also providing an estimation of the channel characteristics between the OLT and the ONU which allows to initialize the equalizer coefficients for high-speed PON transmission systems with dispersive communication channels.

This object is achieved, according to a first example aspect of the present disclosure, by an optical network unit, abbreviated ONU, for downstream data reception in a passive optical network, abbreviated PON, of a first data frame stream sent by an optical line termination, abbreviated OLT, wherein the first data frame stream is converted into a second data frame stream by propagation from the OLT to the ONU along a dispersive communication channel comprised in the PON, wherein the ONU comprises:

- a receiver configured to process the second data frame stream, wherein the second data frame stream comprises samples positioned at sample indices along data frames of the second data frame stream;
- a correlation determining unit configured to determine for each sample index a correlation value between a sequence of samples around a sample with the sample index and a predetermined sequence of symbols indicative of a frame boundary of a data frame in the first data frame stream;

CHARACTERIZED IN THAT the ONU further comprises:

- a hunting unit configured to identify a sample index corresponding to a correlation value with largest absolute value, thereby:

  o detecting frame boundaries of the data frames within the second data frame stream and thereby synchronizing the ONU with the OLT; and
  o estimating the coefficient with largest absolute value of a channel impulse response of the dispersive communication channel and thereby providing a channel estimation of the dispersive communication channel; and

- a training unit configured to, when the hunting unit synchronizes the ONU with the OLT and when the training unit receives the channel estimation from the hunting unit, configure an equalizer in accordance with the channel estimation for the downstream data reception.

The ONU according to the present disclosure performs joint time synchronization and channel estimation to enable synchronization and initialization of the equalizer coefficients for high-speed PON transmission system for dispersive communication channels. The low-complexity and robust synchronization of the ONU operates directly on the samples received from the OLT for example before the equalizer of the ONU, which resolves the causality dilemma formulated above. Additionally, the ONU according to the present disclosure provides an implicit channel estimation which can be used for fast initial channel equalizer estimation.

When the ONU receives a second data frame stream from the OLT, at first, the ONU is not aware of the data frame boundaries within the second data frame stream. In the context of the present disclosure, the ONU can identify the data frame boundaries, i.e. where the data frames start and end within the second data frame stream. In other words, in the context of the present disclosure, the hunt state described above is replaced by a modified hunt state in which the correlation values between a sequence of samples around a sample with a sample index and a predetermined sequence of symbols are calculated for each sample index. After determining the sample index with the largest absolute value of the correlation value, the ONU transitions to a training state in which the equalizer coefficients of the ONU are initialized based on the channel estimation obtained in the modified hunt state. In other words, the ONU configures the equalizer in relation to, i.e. in function of the channel estimation. In other words, the ONU derives the configuration of the equalizer from the channel estimation. The channel equalizer coefficients can then be further updated using a training method until the channel equalizer coefficients converge, i.e., until the BER is sufficiently reduced, after which the ONU can transition to operation for downstream data reception in the PON. Alternatively, the ONU can transition back to the modified hunt state if no convergence is achieved, i.e., if the BER cannot be sufficiently reduced.

In other words, in a first state of the ONU, the ONU is configured to identify a sample index with the best correlation value, thereby:

- detecting frame boundaries of data frames within the second data frame stream and thereby synchronizing the ONU with the OLT; and
- estimating the coefficient with largest absolute value of a channel impulse response of the dispersive communication channel and thereby providing a channel estimation of the dispersive communication channel.

In a second state of the ONU, consecutive to the first state, the ONU is configured to, when the ONU is synchronized with the OLT and when the channel estimation is provided, configure an equalizer in accordance with the channel estimation for the downstream data reception. The first state corresponds for example to the operation of the hunting unit of the ONU and the second stage corresponds for example to the operation of the training unit of the ONU.

The ONU of the present disclosure is an Optical Network Unit. Alternatively, the ONU of the present disclosure is an Optical Network Terminal, also known as ONT. According to the present disclosure, samples correspond to digital samples received by the ONU. Alternatively, samples can be equalized samples or alternative derivative measures of samples. A correlation value according to the present disclosure is a measure that quantifies how well a sequence of received samples matches with a predetermined sequence of transmitted symbols or equivalently a predetermined sequence of symbols. The first data frame stream is transmitted from the OLT towards the ONU along the dispersive communication channel. The first data stream comprises a sequential transmission of data frames comprising a plurality of samples, wherein the data frames comprise frame boundaries. The second data frame stream according to the present disclosure is the data frame stream received by the ONU and corresponding to the first data stream transmitted by the OLT which propagated along the dispersive communication channel towards the ONU, i.e., the second data stream is a attenuated, distorted and noise-corrupted version of the first data frame stream. The optical signals, corresponding to the first data stream propagating along the dispersive communication channel and received at the side of the ONU, are converted into electrical signals which are converted into digital signals. The correlation determining unit according to the present disclosure determines, for at least all the sample indices of a data frame, a correlation value between a sequence of samples around a sample with a sample index, corresponding to the correlation value, and a predetermined sequence of symbols indicative of a frame boundary of a data frame in the first data frame stream. Each sample in a data frame can be indicated by a sample index. A sample index is for example an integer indicative for the position of the corresponding sample within the data frame. For example, a data frame comprising a period of $125\mu s$ with 6,250,000 samples therefore comprises 6,250,000 sample indices labelled, 1, 2, 3, 4, ... 6,250,000 wherein each sample index is associated with the corresponding sample in the data frame. A correlation value according to the present disclosure is a signed value, i.e. a correlation value can be positive or negative. The hunting unit identifies the sample index with the largest absolute value of the correlation values determined by the correlation determining unit. A sequence of samples around a sample with a sample index according to the present disclosure corresponds to a window comprising the sample with the sample index corresponding to the correlation value, and also a consecutive set of samples before the sample with the sample index and/or a consecutive set of samples after the sample with the sample index. For example, the sample with the sample index can be the last sample of the sequence of samples. In other words, for example, when the correlation determining unit determines a correlation value for a sample with a sample index which is the last sample of the sequence of samples, the sequence of samples comprises the sample with the sample index and for example 63 previous samples. Alternatively, the sample with the index sample is comprised in the sequence of samples at any other alternative position. The sequence of samples according to the present disclosure has a length which is equal to the length of the predetermined sequence of symbols. In other words, the correlation determining unit determines correlation values, at least for each sample index of a data frame, between a sequence of samples around the sample with the sample index and the predetermined sequence of symbols of the same length.

According to example embodiments, the ONU further comprises a dividing unit configured to divide the second data frame stream into one or more sets of samples, wherein each set of samples is of a predetermined data frame length; and wherein the correlation determining unit is further configured to:

- in each of the one or more sets of samples, define a set of sample indices, wherein the sets of sample indices over the one or more sets of samples comprise all sample indices of a data frame; and
- for each of the set of samples, determine, for each sample index in the corresponding set of sample indices, a correlation value between the sequence of samples around a sample with the sample index of the set of samples and the predetermined sequence of symbols.

The proposed correlation technique is a low-complexity and robust synchronization scheme that works for PON transmission even under strong ISI and under harsh noise conditions and implicitly also yields a channel impulse response estimate. This proposed correlation technique solves:

- the causality dilemma of synchronization and equalizer training in case decision directed methods are not applicable or fail; and
- the problem of the existing (in)exact PSync matching synchronization scheme proposed in standardization, and that is in fact not able to work for a dispersive communication channel and/or harsh noise condition; and
- the problem of obtaining an estimate of the channel impulse response that can be used for further tuning of the communication chain parameters.

The technical benefits of the proposed correlation technique are:

- robust synchronization under dispersive communication channel and harsh noise conditions; and
- fast initialization of the equalizer; and
- implicit channel estimation with low-computational complexity that can be used for further tuning of the communication chain parameters.

The ONU knows a priori the length of a data frame comprised in the second data frame stream received by the ONU. A set of samples has a length equal to a predetermined data frame length, i.e. a set of samples has a length equal to the length of a data frame known a priori by the ONU. The second data frame stream comprises a sequential transmission of data frames. For example, the second data frame stream comprises a sequential transmission of data frames wherein each data frame comprises a period of $125\mu s$ with 6,250,000 samples. To each sample of each data frame corresponds a sample index. In other words, each data frame comprises for example a period of $125\mu s$ with 6,250,000 samples and therefore 6,250,000 sample indices labelled, 1, 2, 3, 4, ... 6,250,000 wherein each sample index is associated with the corresponding sample in the data frame. Ideally, the ONU computes the correlation value for each sample index over a period of $125\mu s$, i.e. for each sample index of a data frame, identifying a correlation peak and then identifying the boundaries of the data frames in the second data frame stream. However, this is computationally very demanding to perform in one period of $125\mu s$. According to an example embodiment of the present disclosure, the ONU computes a correlation value over a longer time frame, such as for example 64 periods of $125\mu s$, where each sample index, comprised between 1 and 6,250,000 is sampled for example once over the 64 periods. For instance, the ONU computes a correlation value on a first set of samples for sample indices 1, 65, 129, 193, etc.. The ONU then computes a correlation value on a second set of samples for sample indices 2, 66, 130, 194, etc.. and so on until a 64th set of samples on which the ONU computes a correlation value for sample indices 64, 128, 192, etc.. In other words, according to an example embodiment of the present disclosure, the ONU according to the present disclosure computes for example every 64 samples a single correlation value, resulting in on average $6.25.10^6/64$ correlations per data frame. This allows determining a correlation value at each sample index over a period that corresponds to the time of for example 64 data frames.

To explain the proposed correlation technique, the dispersive communication channel is first modelled by a finite linear impulse response with $v$ taps, which is represented by a column vector as follows in equation (1):

$$ h = [h_0, h_1, \dots, h_{v-1}]^T \qquad (1) $$

The received signal $y[n]$ at sample index $n$ then consists of the convolution of the binary symbols $x[k]$ with $h$, contaminated by uncorrelated Additive White Gaussian Noise or AGWN as in equation (2):

$$y[n] = \sum_{m=0}^{\nu-1} h[m]x[n-m] + z[n] \qquad (2)$$

The predetermined sequence of symbols is for example the 64-bit PSync symbol sequence described above. The predetermined sequence of symbols is represented by a column vector as follows in equation (3):

$$\boldsymbol{p} = [p_0, p_1, \ldots, p_{L-1}]^T \qquad (3)$$

For example, $L$ =64, but also other values, e.g. 128 or 256, could be considered. Also note that in case of non-return to zero on-off keying the elements of $p$ correspond to binary +1/-1 values. In case of for example PAM-4 modulation the elements of $p$ correspond to +3/+1/-1/-3 values.

According to example embodiments, the correlation determining unit is further configured to determine the correlation value corresponding to a sample index by:

- determining a set of values by multiplying samples in the sequence of samples with corresponding symbols in the predetermined sequence of symbols; and
- summing the set of values, thereby determining the correlation value corresponding to the sample index.

For each sample index $n$, the proposed scheme correlates the current sequence of $L$ samples containing the sample index $n$ with the predetermined sequence of symbols, for example with the Psync symbol, i.e. equation (4) defines the correlation value corresponding to sample index n as understood in the context of the present disclosure, which can for example be referred to as a correlation coefficient:

$$c[n] = \frac{1}{L}\left(\sum_{l=0}^{L-1} p_{L-1-l} y[n + \delta - l]\right). \qquad (4)$$

where $0 \leq \delta \leq L - 1$ is a predetermined offset value.

This way, all cases where the sample corresponding to the sample index for which a correlation value is determined can be the last, first, center,..., sample of the sequence of samples are herewith described.

According to example embodiments, the correlation determining unit is further configured to:

- identify correlation peaks amongst absolute values of the correlation values; and
- store correlation values at the correlation peaks and/or store sample indices corresponding to the correlation peaks.

According to example embodiments, the correlation determining unit is further configured to:

- for a subsequent set of samples, determine a correlation value between the sequence of samples in the subsequent set of samples and the predetermined sequence of symbols only for sample indices corresponding to the correlation peaks; and
- store the correlation values for the subsequent set of samples.

This way, a correlation value is calculated only at the sample indices which correspond to the ones where correlation peaks were identified in other sets of samples, thereby saving computational power and/or computation time. A correlation peak according to the present disclosure can be positive or negative. A subsequent set of samples according to the present disclosure is for example a set of samples consecutive to the first set of samples in the second data stream. Alternatively, the subsequent set of samples is not necessarily consecutive to the first set of samples but can be any set of samples within the second data stream.

To understand the operation of the above proposed correlation with a predetermined sequence of symbols such as for example the Psync symbol, the correlation value can be reformulated as follows in equation (5):

$$c[n] = \frac{1}{L}\sum_{m=0}^{\nu-1} h[m](\boldsymbol{p}^T \boldsymbol{x}_{n-m}) + \frac{1}{L}\sum_{l=0}^{L-1} p_{L-1-l}z[n-l] \qquad (5)$$

where $x_{n-m} = [x[n - m - L + 1], ...,x[n - m]]^T$ and without loss of generalization the offset value $\delta = 0$.

To show the channel estimation property, the first term of the last line of equation (5) illustrates that when $x_{n-m}$ at sample index $n$ is equal to the Psync symbol $\boldsymbol{p}$, then the correlation coefficient $c[n]$ will contain a dominant term corresponding to the channel impulse element $h[m]$. This is because the PSync design as currently used in XGS-PON has an autocorrelation property that resembles a Dirac impulse. This means that the correlation (i.e., the dot product) of $p$ with itself equals $L$, while the correlation of $p$ with a shifted version of itself is very small. In addition, the correlation of random data bit vectors with the $p$ is expected to be zero. As a result, the outcome of the correlation value at sample index $n$ corresponds to the channel impulse response element $h[k]$ if sample index $n$ corresponds to the sample that is for example $L + k$ - 1 samples later with respect to the first sample of the transmitted Psync. The implicit channel impulse response estimation property of the proposed correlation technique is thus enabled by the autocorrelation property of the PSync design.

According to example embodiments, the correlation determining unit is further configured to average, for the correlation peaks, the correlation values determined over the sets of samples; and the hunting unit is further configured to identify a sample index of an averaged correlation value with largest absolute value, thereby detecting frame boundaries of data frames within the second data frame stream and thereby synchronizing the ONU with the OLT.

This way, averaging the correlation values over all the sets of samples and identifying the sample index of the correlation value with largest absolute value allows identifying the boundaries of data frames in the second data stream and enables the synchronization of the ONU with the OLT.

Based on the previous analysis, the correlation value $c[n]$ will display the following behavior:

- when one of the transmit vectors $x_{n-m}$ corresponds to the Psync (or nearly corresponds to) pattern, $c[n]$ corresponds to a noisy channel coefficient $h[m]$. The noise is due to (i) the additive noise $z[n]$ and (ii) due to the correlation with the random data transmitted before and after the PSync pattern. By averaging this correlation over multiple frames, the correlation value $c[n]$ is expected to better approach $h[k]$;
- when all transmit vectors $x_{n-m}$ correspond to data vectors, the correlation value $c[n]$ is mostly determined by the "random" correlation between the PSync symbol and these data vectors. Since the expectation of this random correlation is zero, averaging these random correlations coefficients $c[n]$ over multiple PHY frames will thus cause their amplitude to approach 0.

As a result, the correlation values $c[n]$ averaged over multiple PHY frames directly provide an estimate of the dispersive communication channel, and the peak of this channel (observed in the correlation values $c[n]$) can be used to synchronize with the OLT, i.e., to determine the location of PSync/start of a data frame in the second data frame stream.

However, a downstream data frame for example corresponds to a time interval of 125 $\mu$s. This include the (64-bit) PSync and data with up to about 6 million data bits. Storing the whole sequence of the correlation values $c[n]$ for averaging purposes requires excessive memory and is therefore not feasible.

An additional benefit of the proposed correlation technique, is that the the obtained channel response estimate can be further improved to an exact least-squares (LS) channel response estimate by multiplying the correlation sequence $c[n]$ (that is, the neighboring elements of the largest correlation value obtained after peak detection and/or averaging over multiple frames) with the inverse of the covariance matrix $(\boldsymbol{P}^T\boldsymbol{P})^{-1}$, in which $\boldsymbol{P}$ is a Toeplitz matrix based on the predetermined sequence of samples, as defined by LS channel estimation methods Alternatively, note that $(\boldsymbol{P}^T\boldsymbol{P})^{-1}$ can be pre-computed at the receiver.

According to example embodiments, the correlation value with largest absolute value is an estimate of the largest coefficient of the channel impulse response of the dispersive communication channel; and correlation values at sample indices neighbouring the sample index corresponding to the correlation value with largest absolute value provide an estimate of other coefficients of the channel impulse response of the dispersive communication channel.

The corresponding correlation peak provides an estimate of the largest element of the channel impulse response only, not the full channel impulse response of the dispersive communication channel. The correlation values at samples indices neighboring the sample index corresponding to the correlation value with the largest absolute value provide an estimate of other non-peak coefficients of the channel impulse response of the dispersive communication channel. The samples indices neighboring the sample index corresponding to the correlation value with the largest absolute value are for example the nearest neighbors of the sample index with largest absolute value, for example the sample index before the sample index with largest correlation value and the sample index after the sample index with the largest correlation value. Alternatively, the samples indices neighboring the sample index corresponding to the correlation value with the largest absolute value are for example further away from the sample index with largest correlation value, for example three sample indices before the sample index with largest correlation value and three sample indices after the sample index with the largest correlation value.

According to example embodiments, the training unit is further configured to:

- determine channel equalizer coefficients from the channel estimation to configure the equalizer;
- update the equalizer using a training method;
- transition the ONU to operation for the downstream data reception of data frames in the second data frame stream.

After the proposed synchronization procedure is completed, the implicit channel response estimate can be leveraged to initialize the equalizer. After initialization further equalizer training in either decision-directed ortraining mode can be employed. To give an example, in case of an FFE with $N_f$ taps, the following equation (6) can be used:

$$w = (HH^T + \sigma_{noise}I)^{-1}H^T 1_\Delta \qquad (6)$$

where $H$ is a $N_f \times N_f + v - 1$ Toeplitz matrix with $[h^T \ 0_{v-1}]$ as first row, $I$ the identity matrix, $\sigma_{noise}$ the AWGN power, and $1_\Delta$ is a zero column vector of length $N_f + v - 1$ with a single one in position $\Delta + 1$. Alternatively, one can use a frequency-domain approach for initializing the FFE. It consists of first computing the fast Fourier transform (FFT) of the channel impulse response, which results in a set of $\left[H_0^f, ..., H_{P-1}^f\right]$ channel frequency responses. Here P denotes the FFT size, which needs to be larger than the number of FFE taps $N_f$ Then the frequency-domain channel equalizer coefficients can be computed as in equation (7):

$$W_p^f = \frac{\left(H_p^f\right)^*}{\left|H_p^f\right|^2 + \sigma_n} \qquad (7)$$

where $\sigma_n$ is the frequency-domain noise power, and ()* refers to the complex conjugate operation. Finally, the time-domain channel equalizer coefficients are obtained by computing the inverse FFT of sequence $\left[W_0^f, ..., W_{P-1}^f\right]$.

In case of a DFE with a feedforward and feedback filter of respective $N_f$ of $N_b$ taps, the following equation (8) can be used:

$$w = \left(H\left(I - J_\Delta J_\Delta^T\right)H^T + \sigma_{noise}I\right)^{-1}H^T 1_\Delta \qquad (8)$$

where $J_\Delta$ is an $N_f + v - 1 \times N_b$ matrix of 0's and 1's, which has the upper $\Delta + 1$ rows zeroed and an identity matrix of dimension min($N_b$, $N_t + v - 1 - \Delta - 1$) with zeros to the right (when $N_f + v - 1 - \Delta - 1 < N_b$), zeros below (when $N_f + v - 1 - \Delta - 1 > N_b$), or no zeros to the right or below exactly fitting in the bottom of $J_\Delta$ (when $N_f + v - 1 - \Delta - 1 = N_b$). Alternatively, like the FFE case, a frequency domain approach could be taken.

According to example embodiments, the training method corresponds to one or more of the following:

- a decision-directed method;
- a training method based on known sequences transmitted to the ONU.

According to example embodiments, each of the data frames of the first data frame stream comprises a symbol sequence and a frame payload, wherein the symbol sequence corresponds to a downstream physical synchronization block and wherein the downstream physical synchronization block comprises the predetermined sequence of symbols.

Preferably, the predetermined sequence of symbols of a data frame precedes the corresponding frame payload of the data frame in the first data frame stream. In other words, the predetermined sequence of symbols comprised in the downstream physical synchronization block comprises information indicative for a boundary of the corresponding data frame, more precisely indicative for the start of the corresponding data frame in the first data frame stream.

According to example embodiments, the data frames are 125 microseconds long, wherein the downstream physical synchronization block comprises 24 bytes, and wherein the predetermined sequence of symbols comprises 64 bits.

According to example embodiments, the predetermined sequence of symbols comprises a complementary Golay pair comprises one of the following:

- a single sequence of a complementary Golay pair;
- a repetition of one sequence of a complementary Golay pair;
- a repetition of both sequences of a complementary Golay pair;
- a concatenation of both sequences of a complementary Golay pair;
- a precursor and/or a postcursor to one sequence of a complementary Golay pair;
- a precursor and/or a postcursor to a concatenation of both sequences of a complementary Golay pair.

On-off keying can be used in PONs, which implies that the elements of $p$ correspond to binary +1 or -1 values. The multiplication of an element of $p$ and the received sample, is thus not explicitly needed. Instead, the operation can be achieved by a plain sign change, or by considering additions or subtractions. This means that the correlation value corresponds to adding/subtracting the L last received samples. Further the division can be implemented by a plain bit shift right operation, when $L$ corresponds to a power of two. Summarized the complexity of one correlation corresponds to $L$ - 1 additions or subtractions, and one bit shift right operation with $log_2(L)$ bits. The division can also be neglected, as it only corresponds to a scaling operation that is equal for all correlations. This further reduces the computational complexity of the correlation.

The complexity of the correlation can be further reduced by considering a predetermined sequence of symbols with a specific pattern, for example a Psync symbol with a specific pattern. For instance, one can design a complementary Golay pair, which corresponds to two sequences (of binary +1 and -1 values) that have the property that the sum of their autocorrelation equals $2L$ for a zero shift, and zero otherwise. Each of these two sequences can also have a good autocorrelation property on its own, which makes these complementary Golay sequences particularly interesting for synchronization and channel estimation. The Psync symbol can be constructed from a single Golay sequence, or from a repetition of one sequence (or both sequences), or from a concatenation of both sequences. Further one can also consider adding a precursor and/or postcursor to the sequence(s).

The benefit of considering such an alternative Psync symbol based on sequences from a complementary Golay pair is that this allows to use a Fast Golay correlator scheme such as for example the one described in the Electronics Letters publication, vol. 27, no. 3, Jan 1990, of S.Z. Budisin, entitled 'Efficient Pulse Compressor for Golay Complementary Sequences', to perform the correlation computation $c[n]$ with only 2 * $log_2(L)$ - 1 additions/subtractions. For $L$ = 64, this reduces the number of required additions/subtractions from 63 to 11, which corresponds to a complexity reduction of a factor of $\approx$5.5. For the Fast Golay correlator scheme known from the publication mentioned in this paragraph, the rectangular blocks correspond to delay operations with delay Si, the triangular blocks correspond to multiplications with Wi (+1 or -1) (which correspond to plain sign changes or can be integrated into the additions/subtractions). The scheme repeats a similar structure over $log_2(L)$ steps. For $L$ = 64, this corresponds to 6 steps, and thus 2 * $log_2(L)$ additions/subtractions. The received signal is fed as input into the Fast Golay correlator scheme, and the outputs of the scheme correspond to the correlation with the corresponding complementary Golay pairs (or the time-reversed versions thereof). Depending on the choice of the Psync, this Fast Golay correlator scheme can be slightly adjusted. For instance, if the Psync symbol is chosen to be equal to one of both Golay pair sequences (or the time-reversed version thereof), then the last step only requires a single output, and one can save 1 addition/subtraction, resulting in 2 * $log_2(L)$ - 1 additions/subtractions per sample. The complexity benefit of considering an alternative Psync symbol based on complementary Golay codes is important and can be used as low-complexity argument.

According to example embodiments, the ONU further comprises means configured to model the dispersive communication channel by a finite linear impulse response.

According to example embodiments, the data frames are contaminated by uncorrelated additive white Gaussian noise.

According to example embodiments, the channel estimation can be used to initialize one or more of the following equalizers:

- Feedforward Equalizer;
- Decision Feedback Equalizer;
- Maximum Likelihood Sequence Estimation;
- Bahl-Cocke-Jelinek-Raviv equalizer.

According to example embodiments, the PON is a 50G PON.

For example, the PON according to the present disclosure is a 50G PON. For example, the PON according to the present disclosure is a TDM PON. Alternatively, for example, the PON according to the present disclosure is a TWDM PON.

According to a second example aspect, a method is disclosed for synchronizing and equalizing an optical network unit, abbreviated ONU, for downstream data reception in a passive optical network, abbreviated PON, of a first data frame stream sent by an optical line termination, abbreviated OLT, wherein the first data frame stream is converted into a second data frame stream by propagation from the OLT to the ONU along a dispersive communication channel comprised in the PON, wherein the ONU comprises:

- processing the second data frame stream, wherein the second data frame stream comprises samples positioned at sample indices along data frames of the second data frame stream;
- determining for each sample index a correlation value between a sequence of samples around a sample with the sample index and a predetermined sequence of symbols indicative of a frame boundary of a data frame in the first data frame stream;

CHARACTERIZED IN THAT the method further comprises the steps of:

- in a first state, identifying a sample index corresponding to a correlation value with largest absolute value, thereby:

   o detecting frame boundaries of the data frames within the second data frame stream and thereby synchronizing the ONU with the OLT; and
   o estimating the coefficient with largest absolute value of a channel impulse response of the dispersive communication channel and thereby providing a channel estimation of the dispersive communication channel; and

- in a second state, when the ONU is synchronized with the OLT and when the channel estimation is provided, configure an equalizer in accordance with the channel estimation for the downstream data reception.

The method according to the present disclosure performs joint time synchronization and channel estimation to enable synchronization and initialization of the equalizer coefficients for high-speed PON transmission system for dispersive communication channels. The low-complexity and robust synchronization of the ONU operates directly on the samples received from the OLT for example before the equalizer of the ONU, which resolves the causality dilemma formulated above. Additionally, the method according to the present disclosure provides an implicit channel estimation which can be used for fast initial channel equalizer estimation.

When the ONU receives a second data frame stream from the OLT, at first, the ONU is not aware of the data frame boundaries within the second data frame stream. In the context of the present disclosure, the ONU can identify the data frame boundaries, i.e. where the data frames start and end within the second data frame stream. In other words, in the context of the present disclosure, the hunt state described above is replaced by a modified hunt state in which the correlation values between a sequence of samples around a sample with a sample index and a predetermined sequence of symbols are calculated for each sample index. After determining the sample index with the largest absolute value of the correlation value, the ONU transitions to a training state in which the equalizer coefficients of the ONU are initialized based on the channel estimation obtained in the modified hunt state. In other words, the ONU configures the equalizer in relation to, i.e. in function of the channel estimation. In other words, the ONU derives the configuration of the equalizer from the channel estimation. In case of FFE/DFE the channel equalizer coefficients are then updated using training method until the channel equalizer coefficients converge, i.e., until the BER is sufficiently reduced, after which the ONU can transition to operation for downstream data reception in the PON. Alternatively, the ONU can transition back to the modified hunt state if no convergence is achieved, i.e., if the BER cannot be sufficiently reduced.

In other words, in a first state of the ONU, the ONU is configured to identify a sample index with the best correlation value, thereby:

- detecting frame boundaries of data frames within the second data frame stream and thereby synchronizing the ONU with the OLT; and
- estimating the coefficient with largest absolute value of a channel impulse response of the dispersive communication channel and thereby providing a channel estimation of the dispersive communication channel.

In a second state of the ONU, consecutive to the first state, the ONU is configured to, when the ONU is synchronized with the OLT and when the channel estimation is provided, configure an equalizer in accordance with the channel estimation for the downstream data reception.

According to example embodiments, the method further comprises the steps of:

- dividing the second data frame stream into one or more sets of samples, wherein each set of samples is of a predetermined data frame length;

- in each of the one or more sets of samples, defining a set of sample indices, wherein the sets of sample indices over the one or more sets of samples comprise all sample indices of a data frame; and
- for each of the set of samples, determining, for each sample index in the corresponding set of sample indices, a correlation value between the sequence of samples around a sample with the sample index of the set of samples and the predetermined sequence of symbols.

According to an example embodiment, during the period of a first set of samples (i.e., full set of samples of N bits corresponding to 125 microseconds), the following operations are performed for every received sample index $n$ = $0..N-1$:

- the correlation value $c^0[n]$ of the current sequence of samples in the second data frame stream with the predetermined sequence of symbols is computed, where the superscript 0 indicates the first PHY frame;
- the absolute value of the current correlation value $c^0[n]$ is compared with the $M$ highest (in absolute value) correlation peaks so far, which are being stored in a memory. Denote by $n_1, n_2, ..., n_M$, the sample indices that correspond to these $M$ correlation peaks. For each $n_r$, the sequence $c^0[n_r - \delta_1], ..., c^0[n_r + \delta_2]$ corresponding to a channel estimation can be stored in memory, or this can be performed in the following step. This can be implemented with a simple overwriting buffer for each correlation peak. The parameters $\delta_1$ and $\delta_2$ are chosen based on the expected channel length of the channel impulse response. If the absolute value of $c^0[n]$ is higher than one of the stored correlation peaks, their values are swapped; and
- in the subsequent sets of samples $j = 1 ...J$, only the correlation values ] corresponding to each sample index of the M correlation peaks stored for the set of samples are calculated and stored in the corresponding correlation peak memory. After $J$ subsequent sets of samples, the correlation value with largest absolute value is selected, and used to synchronize and to obtain a channel estimate.

According to a third example aspect, a computer program product comprising computer-executable instructions is provided for causing an optical network unit, abbreviated ONU, to perform at least the following for synchronizing and equalizing the ONU, for downstream data reception in a passive optical network, abbreviated PON, of a first data frame stream sent by an optical line termination, abbreviated OLT, wherein the first data frame stream is converted into a second data frame stream by propagation from the OLT to the ONU along a dispersive communication channel comprised in the PON:

- processing the second data frame stream, wherein the second data frame stream comprises samples positioned at sample indices along data frames of the second data frame stream;
- determining for each sample index a correlation value between a sequence of samples around a sample with the sample index and a predetermined sequence of symbols indicative of a frame boundary of a data frame in the first data frame stream;

CHARACTERIZED IN THAT the computer-executable instructions cause the ONU to further perform at least the following:

- in a first state, identifying a sample index corresponding to a correlation value with largest absolute value, thereby:

  o detecting frame boundaries of the data frames within the second data frame stream and thereby synchronizing the ONU with the OLT; and
  o estimating the coefficient with largest absolute value of a channel impulse response of the dispersive communication channel and thereby providing a channel estimation of the dispersive communication channel; and

- in a second state, when the ONU is synchronized with the OLT and when the channel estimation is provided, configure an equalizer in accordance with the channel estimation for the downstream data reception.

According to a fourth example aspect, a computer readable storage medium comprising computer-executable instructions for performing the following steps when the program is run on a computer is provided for synchronizing and equalizing an optical network unit, abbreviated ONU, for downstream data reception in a passive optical network, abbreviated PON, of a first data frame stream sent by an optical line termination, abbreviated OLT, wherein the first data frame stream is converted into a second data frame stream by propagation from the OLT to the ONU along a dispersive communication channel comprised in the PON:

- processing the second data frame stream, wherein the second data frame stream comprises samples positioned at sample indices along data frames of the second data frame stream;

- determining for each sample index a correlation value between a sequence of samples around a sample with the sample index and a predetermined sequence of symbols indicative of a frame boundary of a data frame in the first data frame stream;

CHARACTERIZED IN THAT the computer-executable instructions cause the performing of the further following steps:

- in a first state, identifying a sample index corresponding to a correlation value with largest absolute value, thereby:

  o detecting frame boundaries of the data frames within the second data frame stream and thereby synchronizing the ONU with the OLT; and
  o estimating the coefficient with largest absolute value of a channel impulse response of the dispersive communication channel and thereby providing a channel estimation of the dispersive communication channel; and

- in a second state, when the ONU is synchronized with the OLT and when the channel estimation is provided, configure an equalizer in accordance with the channel estimation for the downstream data reception.

## Brief Description of the Drawings

Some example embodiments will now be described with reference to the accompanying drawings.

Fig. 1A depicts an example embodiment of a downstream ONU synchronization state machine according to the prior art.

Fig. 1B depicts an example embodiment of a downstream ONU synchronization state machine according to the present disclosure.

Fig. 2 depicts an example embodiment of an ONU according to the present disclosure.

Fig. 3A to Fig. 3D illustrate an example embodiment of the proposed correlation technique according to the present disclosure.

Fig. 4 depicts an example embodiment of the detection of a correlation peak in function of samples indices.

Fig. 5 shows an example embodiment of a suitable computing system for performing one or several steps in embodiments of the invention.

## Detailed Description of Embodiment(s)

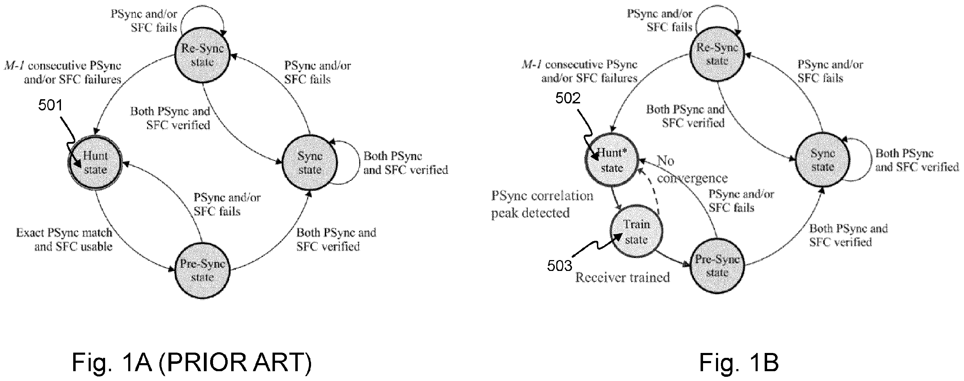

Fig. 1A illustrates an example embodiment of a downstream ONU synchronization state machine according to the prior art. In conventional downstream PON transmission, the OLT is continuously broadcasting to all the ONUs due to the Point-To-MultiPoint topology. The transmitted data stream is organized in physical frames, abbreviated PHY frames. For International Telecommunications Union PON technologies, a PHY frame comprises a downstream Physical Synchronization block, also referred to as PSBd. A PHY frame further comprises data payload following the PSBd in the PHY frame. Different PHY frames are transmitted sequentially, one after the other, from the OLT to the ONU. An ONU can only decode this data stream if it is properly time synchronized with the OLT. In other words, an ONU can only decode this data stream if it knows where the beginning of each PHY frame is in the received symbol sequence of the corresponding PHY frame. For this purpose, the PSBd comprises a known standardized bit-pattern called Psync. By locating this known standardized bit-pattern, an ONU can determine the beginning of the PHY frame. Hence, when a new ONU initializes, it will start in the so-called hunt state 501, during which the new ONU will scan through the PHY frame looking for the sequence of received bits that matches the known standardized bit-pattern of the Psync pattern up to a few errors. The prior art time synchronization scheme, i.e., determining the location of the Psync in the bit sequence, corresponds to finding a match with the Psync pattern in the output of the decision device. The match can be exact or up to a few errors. This scheme originates from legacy PON technologies, like XGS-PON or NG-PON2, which operate in optical channels without significant ISI. It thus skips all channel equalization parts and corresponds to the following subsequent operations for each received sample:

- make a hard decision on the current received sample to output a bit value;
- compare the hard-decisions of the last received samples to the Psync known standardized bit-pattern, and count the number of errors, i.e., the number of mismatches between the hard-decisions and the corresponding Psync symbol entries;

- the exact Psync known bit-pattern match solution derives a synchronization if there are zero errors, whereas the non-exact Psync known bit-pattern match solution derives a synchronization if there are less than K errors, with for example K=4.

The performances of these Psync pattern match procedures are typically analysed for an Additive White Gaussian Noise channel, also referred to as AWGN, i.e., with noise being the only impairment besides the channel attenuation. However, this scheme fails to operate under PON channels with ISI. In addition, for the non-exact Psync match procedure, ISI will typically result in an error count that is much larger than the typical threshold value considered by a non-exact Psync match procedure, increasing the number of false synchronizations as well. It can only work correctly if it operates on the equalized samples that are equalized by a properly trained equalizer, so that it can sufficiently recover the transmitted symbols which are corrupted by ISI and noise. To achieve this, the equalizer could first be trained using a decision directed method on the random transmitted data symbols, before applying the Psync pattern matching procedure. However, as explained previously, under certain ISI conditions, such decision directed methods could lead to a poor BER, thus making it infeasible to synchronize using the Psync pattern matching procedure. In addition, the decision directed methods are not applicable for certain types of equalizers. Consequently, instead of directly using a decision directed method, it could be necessary to first initialize the equalizer coefficients using a pilot-based method, in which the Psync known standardized bit-pattern can serve as pilot since it is an a priori known sequence of transmitted symbols. However, the pilot-based methods can only be used if the location of the Psync in the stream of received symbols is known, or in other words after the ONU is time synchronized with the OLT.

Fig. 1B depicts an example embodiment of a downstream ONU synchronization state machine according to the present disclosure. When the ONU receives a second data frame stream from the OLT, wherein the second data frame stream corresponds to a first data frame stream sent by the OLT to the ONU and propagated along a dispersive communication channel of the PON, the ONU is not aware of the data frame boundaries of the data frames within the second data frame stream. In the context of the present disclosure, the ONU can identify the data frame boundaries of the data frames in the second data frame stream, i.e. when the data frames start and end within the second data frame stream. In other words, in the context of the present disclosure, the hunt state 501 of Fig. 1A described above is replaced by a modified hunt state 502 in which joint synchronization and channel estimation are performed by applying peak detection to correlation values between a sequence of samples in the received second data frame stream and a predetermined sequence of symbols indicative for a frame boundary of a data frame in the first data frame stream. This modified hunt state 502 is for example performed by a hunting unit of the ONU. After detecting the correlation peak with the predetermined sequence of symbols, the ONU transitions to a train state 503 in which the channel equalizer coefficients of the ONU are initialized based on the rough channel estimation obtained in the modified hunt state 502. This train state 503 is for example performed by a training unit of the ONU. The channel equalizer coefficients are then updated using a training method until the channel equalizer coefficients converge, after which the ONU can transition to operation for downstream data reception. Alternatively, the ONU can transition back to the modified hunt state 502 if no convergence is achieved.

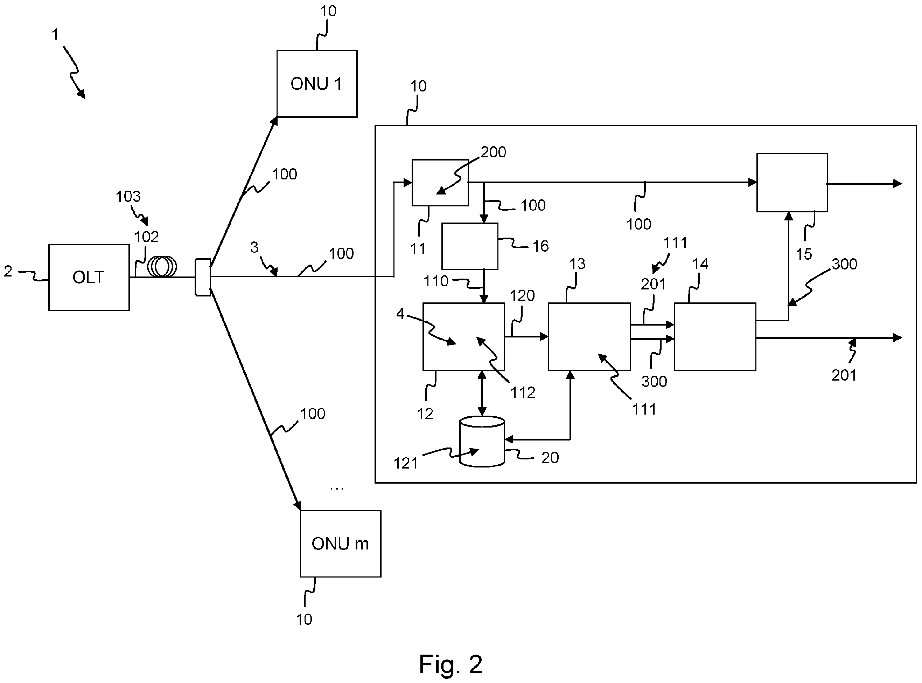

Fig. 2 depicts an example embodiment of an ONU 10 according to the present disclosure. A PON 1 comprises at least one OLT 2 and one or more ONUs 10. The ONUs 10 are configured for downstream reception of first data frame streams 102 along dispersive communication channels 3. The first data frame streams 102 comprise data frames 103. An ONU 10 comprises a receiver 11, a dividing unit 16, a correlation determining unit 12, a hunting unit 13 and a training unit 14. The receiver 11 receives a second data frame stream 100, wherein the second data frame stream 100 comprises samples positioned at sample indices along one or more data frames 200 comprised in the second data frame stream 100, and wherein the second data frame stream 100 corresponds to the first data frame stream 102 propagated along the corresponding dispersive communication channel 3. The dividing unit 16 divides the second data frame stream 100 into one or more sets of samples 110, wherein each set of samples is of a predetermined data frame length. The correlation determining unit 12 determines for each sample index a correlation value 120 between a sequence of samples around a sample with the corresponding sample index and a predetermined sequence of symbols 4 indicative or a frame boundary of a data frame 103 in the first data frame stream 102, wherein each correlation value 120 is related to a sample index of one sample. In each of the one or more sets of samples 110, a set of sample indices 112 is defined by the correlation determining unit 12, wherein the sets of sample indices 112 over the one or more sets of samples 110 comprises all sample indices of a data frame 200. For a first set of samples 110, the correlation determining unit 12 determines for each sample index a correlation value 120 between a sequence of samples around a sample with the sample index and a predetermined sequence of symbols 4 indicative or a frame boundary of a data frame 103 in the first data frame stream 102. The correlation determining unit 12 then slides the sequence of samples along the first set of samples 110 or along subsequent sets of samples 110, and for each sample index, the correlation determining unit 12 determines a correlation value 120 between the sequence of samples around the sample with the sample index and the predetermined sequence of symbols 4. The correlation determining unit 12 then identifies correlation peaks 121 amongst the correlation values 120 and stores, for example in memory 20, the correlation values 120 at the correlation peaks 121 and/or stores samples indices 111 corresponding to the correlation peaks 121. The correlation determining unit 12 determines, for subsequent sets of samples 110, a correlation value 120 between the sequence of samples and the predetermined sequence of symbols 4 only at the sample indices 111 corresponding to the correlation peaks 121. The correlation determining unit 12 further stores, for example in memory 20, the correlation values 120 for the subsequent sets of samples 110. The correlation determining unit 12 further averages, for the correlation peaks 121, the correlation values 120 determined over the sets of samples 110. The hunting unit 13 then identifies a sample index 111 of an averaged correlation value 120 with largest absolute value, thereby:

- detecting frame boundaries 201 of data frames 200 within the second data frame stream 100 and thereby synchronizing the ONU 10 with the OLT 2; and
- estimating the largest coefficient of a channel impulse response of the dispersive communication channel 3 and thereby providing a channel estimation 300 of the dispersive communication channel 3.

When the hunting unit 13 synchronizes the ONU 10 with the OLT 2 and when the training unit 14 receives the channel estimation 300 from the hunting unit 13, the training unit 14 configures an equalizer 15 with the channel estimation 300 for the downstream data reception. The training unit 14 determines channel equalizer coefficients from the channel estimation 300 to configure the equalizer 15. The training unit 14 updates the equalizer 15 using a training method. The equalizer 15 can then output estimated transmitted samples or bits.

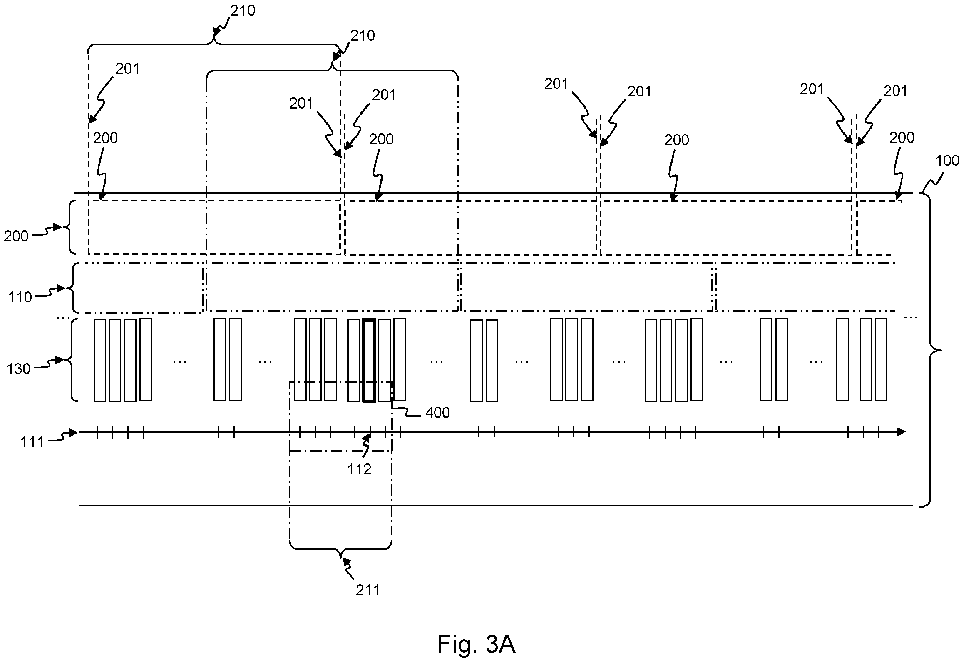

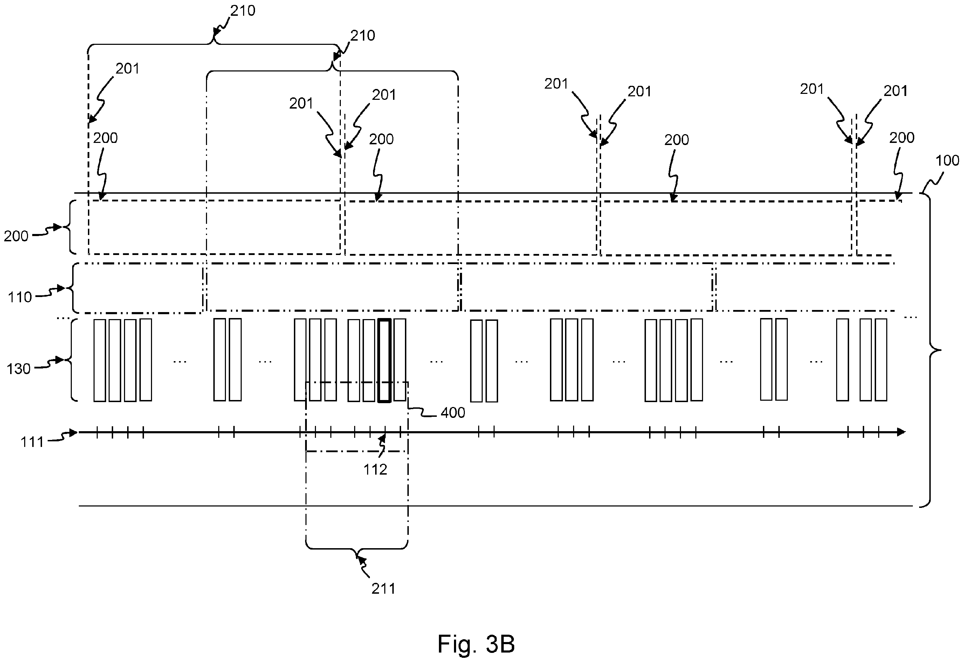

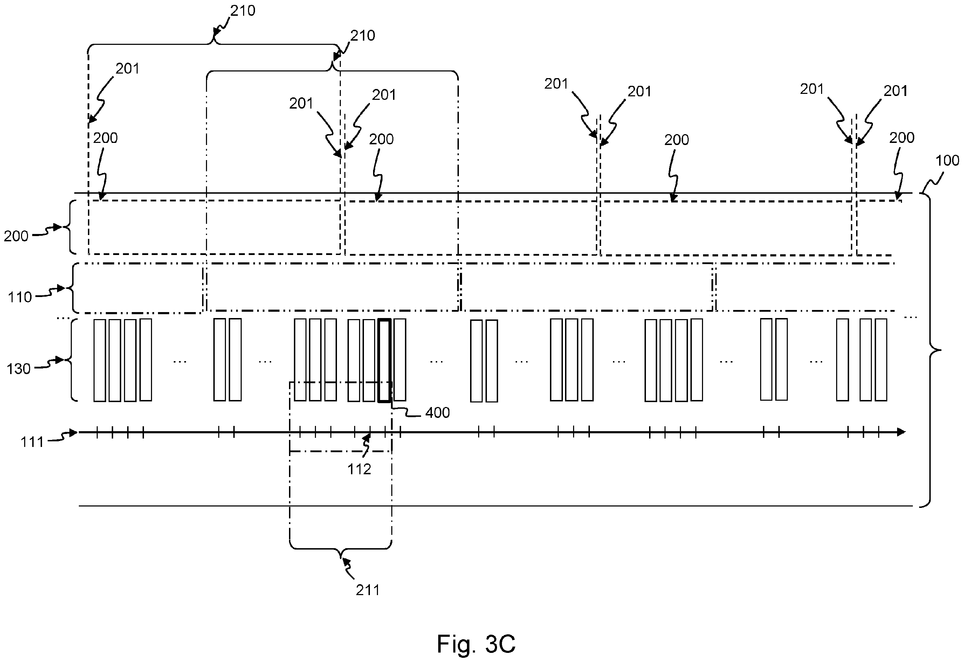

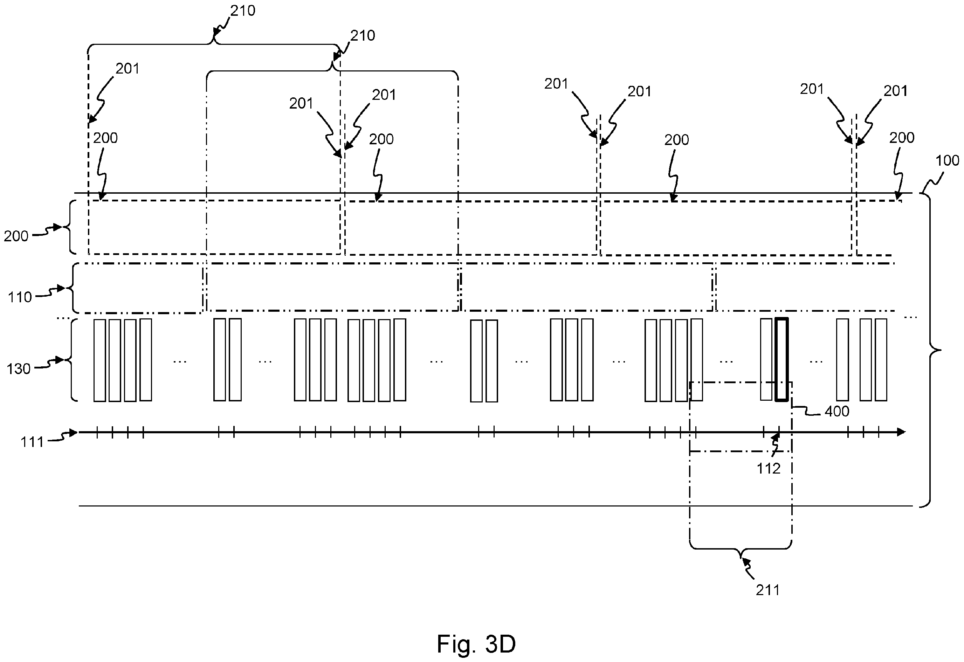

Fig. 3A to Fig. 3D illustrate an example embodiment of the proposed correlation technique according to the present disclosure. Components having identical reference numbers than on Fig. 2 fulfil the same function. As visible on Fig. 3A, a second data frame stream 100 is received by the ONU depicted in Fig. 2, wherein the second data frame stream 100 comprises a sequential transmission of data frames 200. The second data frame stream 100 corresponds to a first data frame stream comprising data frames, wherein the first data frame stream is sent by the OLT towards the ONU along a dispersive communication channel of a PON. The second data frame stream 100 comprises samples 130 positioned at sample indices 111 along one or more data frames 200 comprised in the second data frame stream 100. The second data frame stream 100 is divided into one or more sets of samples 110, wherein each set of samples 110 is of a predetermined data frame length 210, i.e. wherein the length of a set of samples 110 is equal to the length of a data frame 200. The sets of samples 110 are not synced with the data frames 200 of the data frame stream 100. In other words, one or more sets of samples 110 overlap with a data frame 200. In each of the one or more sets of samples 110, a set of sample indices 112 is defined, wherein the sets of sample indices 112 over the one or more sets of samples 110 comprise all sample indices of a data frame 200. A sequence of samples 400 is defined. The length 211 of the sequence of samples 400 is equal to the length of a predetermined sequence of symbols indicative for a frame boundary of a data frame in the first data stream. For each sample index 111, a correlation value is determined between the sequence of samples 400 around the sample with the sample index 111 and the predetermined sequence of symbols. For example, the second data frame stream 100 comprises a sequential transmission of data frames 200 wherein each data frame comprises a period of 125μs with 6,250,000 samples. To each sample 130 of each data frame 200 corresponds a sample index 111. In other words, each data frame 200 comprises for example a period of 125μs with 6,250,000 samples and therefore 6,250,000 sample indices 111 labelled, 1, 2, 3, 4, ... 6,250,000 wherein each sample index 111 is associated with the corresponding sample 130 in the data frame 200. Ideally, the ONU computes the correlation value for each sample index 111 over a period of 125μs, i.e. for each sample index 111 of a data frame 200, identifying a correlation peak and then identifying the boundaries 201 of the data frames 200 in the second data frame stream 100. However, this is computationally very demanding to perform in one period of 125μs. Instead, the ONU computes a correlation value over a longer time frame, such as for example 64 periods of 125μs, where each sample index 111, comprised between 1 and 6,250,000 is sampled for example once over the 64 periods. For instance, on Fig. 3A, the ONU computes a correlation value on a first set of samples 110 for a sample index 112 by determining a correlation value between a sequence of samples 400 around a sample 130 with sample index 112 and the predetermined sequence of symbols. Then, on Fig. 3B, the sequence of samples 400 is moved to the next sample index 112, which is for example on Fig. 3B the next sample index 112, and the ONU determines, for this new sample index 112, a correlation value between the sequence of samples 400 around a sample 130 with sample index 112 and the predetermined sequence of symbols. According to an alternative embodiment depicted by Fig. 3C and Fig. 3D, the ONU computes a correlation value on two different sets of samples 110 when the sequence of samples 400 is shifted to another set of samples 110 comprising the next sample index 112 of the set of sample indices 112 for which a correlation value should be determined.

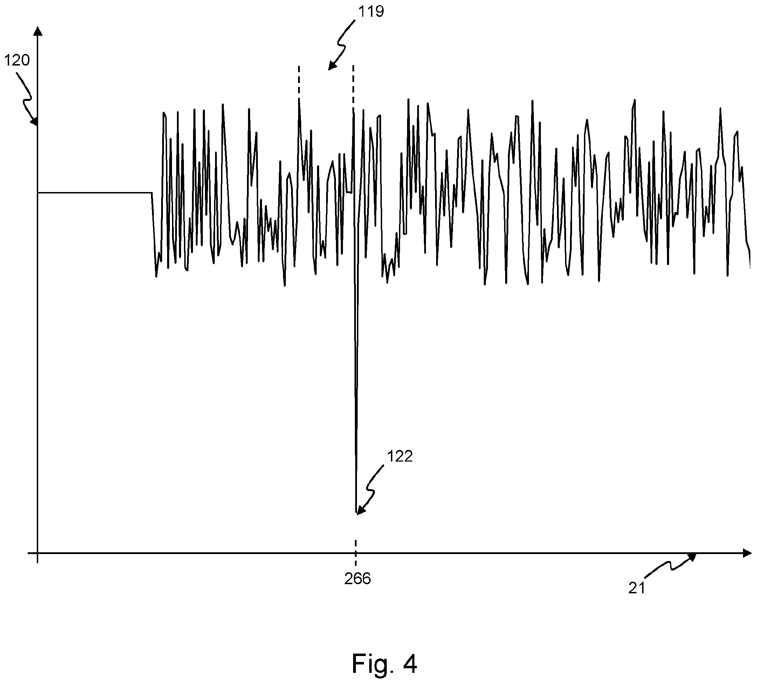

Fig. 4 illustrates an example embodiment of the correlation values 120 for a second data frame stream received by an ONU according to the present disclosure, where the second data frame stream comprises 200 binary data symbols, then the predetermined sequence of symbols, then 736 binary data symbols for an example of a dispersive communication channel of a 50G PON. The estimated predetermined sequence of symbols is indicated by section 119. A clear correlation peak 122 can be observed around sample index 266.

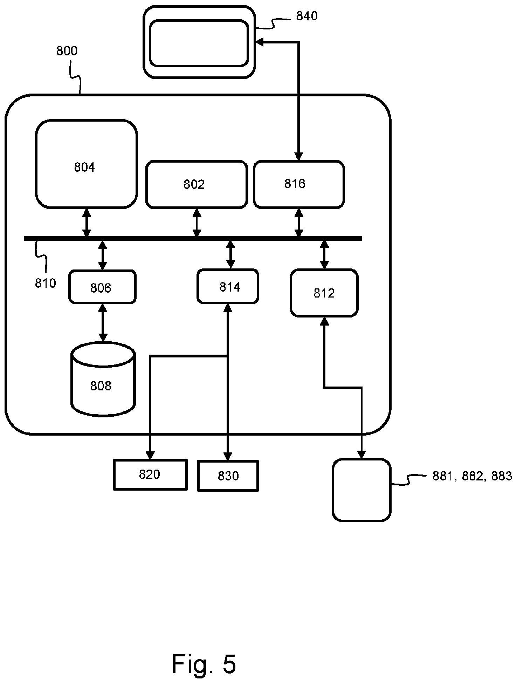

Fig. 5 shows a suitable computing system 800 enabling to implement embodiments of the system. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 800 could thus correspond to the ONU in the embodiment illustrated by Fig. 2.

As used in this application, the term "circuitry" may refer to one or more or all of the following:

(a) hardware-only circuit implementations such as implementations in only analog and/or digital circuitry and
(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. An optical network unit (10), abbreviated ONU, for downstream data reception in a passive optical network (1), abbreviated PON, of a first data frame stream (102) sent by an optical line termination (2), abbreviated OLT, wherein said first data frame stream (102) is converted into a second data frame stream (100) by propagation from said OLT to said ONU (10) along a dispersive communication channel (3) comprised in said PON (1), wherein said ONU (10) comprises:

   - a receiver (11) configured to process said second data frame stream (100), wherein said second data frame stream (100) comprises samples (130) positioned at sample indices (111) along data frames (200) of said second data frame stream (100);
   - a correlation determining unit (12) configured to determine for each sample index (111) a correlation value (120) between a sequence of samples (400) around a sample with said sample index (111) and a predetermined sequence of symbols (4) indicative of a frame boundary of a data frame (103) in said first data frame stream (102);

   **CHARACTERIZED IN THAT** said ONU (10) further comprises:

   - a hunting unit (13) configured to identify a sample index (111) corresponding to a correlation value (120) with largest absolute value, thereby:

      o detecting frame boundaries (201) of said data frames (200) within said second data frame stream (100) and thereby synchronizing said ONU (10) with said OLT (2); and
      o estimating the coefficient with largest absolute value of a channel impulse response of said dispersive communication channel (3) and thereby providing a channel estimation (300) of said dispersive communication channel (3); and

   - a training unit (14) configured to, when said hunting unit (13) synchronizes said ONU (10) with said OLT (2) and when said training unit (14) receives said channel estimation (300) from said hunting unit (13), configure an equalizer (15) in accordance with said channel estimation (300) for said downstream data reception.

2. An ONU (10) according to claim 1, wherein said ONU (10) further comprises a dividing unit (16) configured to divide said second data frame stream (100) into one or more sets of samples (110), wherein each set of samples (110) is of a predetermined data frame length (210);
   and wherein said correlation determining unit (12) is further configured to:

   - in each of said one or more sets of samples (110), define a set of sample indices (112), wherein the sets of sample indices (112) over said one or more sets of samples (110) comprise all sample indices of a data frame (200); and
   - for each of said set of samples (110), determine, for each sample index (111) in the corresponding set of sample indices (112), a correlation value (120) between said sequence of samples (400) around a sample with said sample index (111) of said set of samples (110) and said predetermined sequence of symbols (4).

3. An ONU (10) according to claim 2, wherein said correlation determining unit (12) is further configured to:

   - identify correlation peaks (121) amongst absolute values of said correlation values (120); and
   - store correlation values (120) at said correlation peaks (121) and/or store sample indices (111) corresponding to said correlation peaks (121).

4. An ONU (10) according to claim 3, wherein said correlation determining unit (12) is further configured to:

   - for a subsequent set of samples (110), determine a correlation value (120) between said sequence of samples (400) in said subsequent set of samples (110) and said predetermined sequence of symbols (4) only for sample indices (111) corresponding to said correlation peaks (121); and

- store said correlation values (120) for said subsequent set of samples (110).

**5.** An ONU (10) according to any of the claims 2 to 4, wherein said correlation determining unit (12) is further configured to average, for said correlation peaks (121), said correlation values (120) determined over said sets of samples (110); and wherein said hunting unit (13) is further configured to identify a sample index (111) of an averaged correlation value with largest absolute value, thereby detecting frame boundaries (201) of data frames (200) within said second data frame stream (100) and thereby synchronizing said ONU (10) with said OLT (2).

**6.** An ONU (10) according to any of the preceding claims, wherein said correlation value (120) with largest absolute value is an estimate of said largest coefficient of said channel impulse response of said dispersive communication channel (3); and wherein correlation values (120) at sample indices (111) neighbouring said sample index (111) corresponding to said correlation value (120) with largest absolute value provide an estimate of other coefficients of said channel impulse response of said dispersive communication channel (3).

**7.** An ONU (10) according to any of the preceding claims, wherein said correlation determining unit (12) is further configured to determine said correlation value (120) corresponding to a sample index (111) by:

- determining a set of values by multiplying samples (130) in said sequence of samples (400) with corresponding symbols in said predetermined sequence of symbols (4); and
- summing said set of values, thereby determining said correlation value (120) corresponding to said sample index (111).

**8.** An ONU (10) according to any of the preceding claims, wherein said training unit (14) is further configured to:

- determine channel equalizer coefficients from said channel estimation to configure said equalizer (15);
- update said equalizer (15) using a training method;
- transition said ONU (10) to operation for said downstream data reception of data frames (200) in said second data frame stream (100).

**9.** An ONU (10) according to any of the preceding claims, wherein each of said data frames (103) of said first data frame stream (102) comprises a symbol sequence and a frame payload, wherein said symbol sequence corresponds to a downstream physical synchronization block and wherein said downstream physical synchronization block comprises said predetermined sequence of symbols (4).

**10.** An ONU (10) according to any of the preceding claims, wherein said predetermined sequence of symbols (4) comprises one of the following:

- a single sequence of a complementary Golay pair;
- a repetition of one sequence of a complementary Golay pair;
- a repetition of both sequences of a complementary Golay pair;
- a concatenation of both sequences of a complementary Golay pair;
- a precursor and/or a postcursor to one sequence of a complementary Golay pair;
- a precursor and/or a postcursor to a concatenation of both sequences of a complementary Golay pair.

**11.** An ONU (10) according to any of the preceding claims, wherein said channel estimation (300) can be used to initialize one or more of the following equalizers:

- Feedforward Equalizer;
- Decision Feedback Equalizer;
- Maximum Likelihood Sequence Estimation;
- Bahl-Cocke-Jelinek-Raviv equalizer.

**12.** A method for synchronizing and equalizing an optical network unit (10), abbreviated ONU, for downstream data reception in a passive optical network (1), abbreviated PON, of a first data frame stream (102) sent by an optical line termination (2), abbreviated OLT, wherein said first data frame stream (102) is converted into a second data frame stream (100) by propagation from said OLT to said ONU (10) along a dispersive communication channel (3) comprised in said PON (1), wherein said method comprises the steps of:

- processing said second data frame stream (100), wherein said second data frame stream (100) comprises samples (130) positioned at sample indices (111) along data frames (200) of said second data frame stream (100);
- determining for each sample index (111) a correlation value (120) between a sequence of samples (400) around a sample with said sample index (111) and a predetermined sequence of symbols (4) indicative of a frame boundary of a data frame (103) in said first data frame stream (102);

**CHARACTERIZED IN THAT** said method further comprises the steps of:

- in a first state, identifying a sample index (111) corresponding to a correlation value (120) with largest absolute value, thereby:

o detecting frame boundaries (201) of said data frames (200) within said second data frame stream (100) and thereby synchronizing said ONU (10) with said OLT (2); and
o estimating the coefficient with largest absolute value of a channel impulse response of said dispersive communication channel (3) and thereby providing a channel estimation (300) of said dispersive communication channel (3); and

- in a second state, when said ONU (10) is synchronized with said OLT (2) and when said channel estimation (300) is provided, configuring an equalizer (15) in accordance with said channel estimation (300) for said downstream data reception.

**13.** A method according to claim 12, wherein said method further comprises the steps of:

- dividing said data frame stream (100) into one or more sets of samples (110), wherein each set of samples (110) is of a predetermined data frame length (210);
- in each of said one or more sets of samples (110), define a set of sample indices (112), wherein the sets of sample indices (112) over said one or more sets of samples (110) comprise all sample indices of a data frame (200); and
- for each of said set of samples (110), determine, for each sample index (111) in the corresponding set of sample indices (112), a correlation value (120) between said sequence of samples (400) around a sample with said sample index (111) of said set of samples (110) and said predetermined sequence of symbols (4).

**14.** A computer program product comprising computer-executable instructions for causing an optical network unit (10), abbreviated ONU, to perform the following steps when the program is run on a computer for synchronizing and equalizing said ONU (10), for downstream data reception in a passive optical network (1), abbreviated PON, of a first data frame stream (102) sent by an optical line termination (2), abbreviated OLT, wherein said first data frame stream (102) is converted into a second data frame stream (100) by propagation from said OLT to said ONU (10) along a dispersive communication channel (3) comprised in said PON (1):

- processing said second data frame stream (100), wherein said second data frame stream (100) comprises samples (130) positioned at sample indices (111) along data frames (200) of said second data frame stream (100);
- determining for each sample index (111) a correlation value (120) between a sequence of samples (400) around a sample with said sample index (111) and a predetermined sequence of symbols (4) indicative of a frame boundary of a data frame (103) in said first data frame stream (102);

**CHARACTERIZED IN THAT** said computer-executable instructions cause said ONU (10) to further perform at least the following:

- in a first state, identifying a sample index (111) corresponding to a correlation value (120) with largest absolute value, thereby:

o detecting frame boundaries (201) of said data frames (200) within said second data frame stream (100) and thereby synchronizing said ONU (10) with said OLT (2); and
o estimating the coefficient with largest absolute value of a channel impulse response of said dispersive communication channel (3) and thereby providing a channel estimation (300) of said dispersive communication channel (3); and

- in a second state, when said ONU (10) is synchronized with said OLT (2) and when said channel estimation (300) is provided, configuring an equalizer (15) in accordance with said channel estimation (300) for said downstream data reception.

15. A computer readable storage medium comprising computer-executable instructions for performing the following steps when the program is run on a computer for synchronizing and equalizing an optical network unit (10), abbreviated ONU, for downstream data reception in a passive optical network (1), abbreviated PON, of a first data frame stream (102) sent by an optical line termination (2), abbreviated OLT, wherein said first data frame stream (102) is converted into a second data frame stream (100) by propagation from said OLT to said ONU (10) along a dispersive communication channel (3) comprised in said PON (1):

- processing said second data frame stream (100), wherein said second data frame stream (100) comprises samples (130) positioned at sample indices (111) along data frames (200) of said second data frame stream (100);
- determining for each sample index (111) a correlation value (120) between a sequence of samples (400) around a sample with said sample index (111) and a predetermined sequence of symbols (4) indicative of a frame boundary of a data frame (103) in said first data frame stream (102);

**CHARACTERIZED IN THAT** said computer-executable instructions cause the performing of the further following steps:

- in a first state, identifying a sample index (111) corresponding to a correlation value (120) with largest absolute value, thereby:

o detecting frame boundaries (201) of said data frames (200) within said second data frame stream (100) and thereby synchronizing said ONU (10) with said OLT (2); and
o estimating the coefficient with largest absolute value of a channel impulse response of said dispersive communication channel (3) and thereby providing a channel estimation (300) of said dispersive communication channel (3); and

- in a second state, when said ONU (10) is synchronized with said OLT (2) and when said channel estimation (300) is provided, configuring an equalizer (15) in accordance with said channel estimation (300) for said downstream data reception.

## Patentansprüche

1. Optische Netzwerkeinheit (10), kurz ONU, für einen Downstreamdatenempfang in einem passiven optischen Netzwerk (1), kurz PON, eines ersten Datenframestreams (102), der von einem optischen Leitungsabschluss (2), kurz OLT, gesendet wird, wobei der erste Datenframestream (102) durch Ausbreitung vom OLT zur ONU (10) entlang eines dispersiven Kommunikationskanals (3), der im PON (1) umfasst ist, in einen zweiten Datenframestream (100) umgewandelt wird, wobei die ONU (10) Folgendes umfasst:

- einen Empfänger (11), der dazu ausgelegt ist, den zweiten Datenframestream (100) zu verarbeiten, wobei der zweite Datenframestream (100) Proben (130) umfasst, die an Probenindices (111) entlang Datenframes (200) des zweiten Datenframestreams (100) positioniert sind;
- eine Korrelationsbestimmungseinheit (12), die dazu ausgelegt ist, für jeden Probenindex (111) einen Korrelationswert (120) zwischen einer Sequenz von Proben (400) um eine Probe mit dem Probenindex (111) und einer vorbestimmten Sequenz von Symbolen (4), die eine Framegrenze eines Datenframes (103) im ersten Datenframestream (102) anzeigen, zu bestimmen;

**DADURCH GEKENNZEICHNET, DASS** die ONU (10) ferner Folgendes umfasst:

- eine Sucheinheit (13), die dazu ausgelegt ist, einen Probenindex (111), der einem Korrelationswert (120) mit einem größten Absolutwert entspricht, zu identifizieren, dadurch:

o Detektieren von Framegrenzen (201) der Datenframes (200) im zweiten Datenframestream (100) und dadurch Synchronisieren der ONU (10) mit dem OLT (2); und

o Schätzen des Koeffizienten mit einem größten Absolutwert einer Kanalimpulsantwort des dispersiven Kommunikationskanals (3) und dadurch Bereitstellen einer Kanalschätzung (300) des dispersiven Kommunikationskanals (3); und

- eine Trainingseinheit (14), die, wenn die Sucheinheit (13) die ONU (10) mit dem OLT (2) synchronisiert und wenn die Trainingseinheit (14) die Kanalschätzung (300) von der Sucheinheit (13) empfängt, dazu ausgelegt ist, gemäß der Kanalschätzung (300) einen Entzerrer (15) für den Downstreamdatenempfang auszulegen.

2. ONU (10) nach Anspruch 1, wobei die ONU (10) ferner eine Teilungseinheit (16) umfasst, die dazu ausgelegt ist, den zweiten Datenframestream (100) in einen oder mehrere Sätze von Proben (110) zu teilen, wobei jeder Satz von Proben (110) eine vorbestimmte Datenframelänge (210) aufweist; und wobei die Korrelationsbestimmungseinheit (12) ferner zu Folgendem ausgelegt ist:

- Definieren eines Satzes von Probenindices (112) in jedem des einen oder der mehreren Sätze von Proben (110), wobei die Sätze von Probenindices (112) über den einen oder die mehreren Sätze von Proben (110) alle Probenindices eines Datenframes (200) umfassen; und
- für jede des Satzes von Proben (110) Bestimmen eines Korrelationswertes (120) zwischen der Sequenz von Proben (400) um eine Probe mit dem Probenindex (111) des Satzes von Proben (110) und der vorbestimmten Sequenz von Symbolen (4) für jeden Probenindex (111) im entsprechenden Satz von Probenindices (112) .

3. ONU (10) nach Anspruch 2, wobei die Korrelationsbestimmungseinheit (12) ferner zu Folgendem ausgelegt ist:

- Identifizieren von Korrelationsspitzen (121) unter Absolutwerten der Korrelationswerte (120); und
- Speichern von Korrelationswerten (120) an den Korrelationsspitzen (121) und/oder Speichern von Probenindices (111), die den Korrelationsspitzen (121) entsprechen.

4. ONU (10) nach Anspruch 3, wobei die Korrelationsbestimmungseinheit (12) ferner zu Folgendem ausgelegt ist:

- für einen nachfolgenden Satz von Proben (110) Bestimmen eines Korrelationswertes (120) zwischen der Sequenz von Proben (400) im nachfolgenden Satz von Proben (110) und der vorbestimmten Sequenz von Symbolen (4) nur für Probenindices (111), die den Korrelationsspitzen (121) entsprechen; und
- Speichern der Korrelationswerte (120) für den nachfolgenden Satz von Proben (110).

5. ONU (10) nach einem der Ansprüche 2 bis 4, wobei die Korrelationsbestimmungseinheit (12) ferner dazu ausgelegt ist, für die Korrelationsspitzen (121) die Korrelationswerte (120) zu mitteln, die über die Sätze von Proben (110) bestimmt wurden; und wobei die Sucheinheit (13) ferner dazu ausgelegt ist, einen Probenindex (111) eines gemittelten Korrelationswertes mit einem größten Absolutwert zu identifizieren, wodurch Framegrenzen (201) von Datenframes (200) im zweiten Datenframestream (100) detektiert werden und wodurch die ONU (10) mit dem OLT (2) synchronisiert wird.

6. ONU (10) nach einem der vorhergehenden Ansprüche, wobei der Korrelationswert (120) mit einem größten Absolutwert eine Schätzung des größten Koeffizienten der Kanalimpulsantwort des dispersiven Kommunikationskanals (3) ist; und wobei Korrelationswerte (120) an Probenindices (111), die dem Probenindex (111) benachbart sind, der dem Korrelationswert (120) mit einem größten Absolutwert entspricht, eine Schätzung von anderen Koeffizienten der Kanalimpulsantwort des dispersiven Kommunikationskanals (3) bereitstellen.

7. ONU (10) nach einem der vorhergehenden Ansprüche, wobei die Korrelationsbestimmungseinheit (12) ferner dazu ausgelegt ist, den Korrelationswert (120), der einem Probenindex (111) entspricht, durch Folgendes zu bestimmen:

- Bestimmen eines Satzes von Werten durch Multiplizieren von Proben (130) in der Sequenz von Proben (400) mit entsprechenden Symbolen in der vorbestimmten Sequenz von Symbolen (4); und
- Summieren des Satzes von Werten, dadurch Bestimmen des Korrelationswertes (120), der dem Probenindex (111) entspricht.

8. ONU (10) nach einem der vorhergehenden Ansprüche, wobei die Trainingseinheit (14) ferner zu Folgendem ausgelegt ist:

- Bestimmen von Kanalschätzerkoeffizienten anhand der Kanalschätzung, um den Entzerrer (15) auszulegen;

- Aktualisieren des Entzerrers (15) unter Verwendung eines Trainingsverfahrens;
- Übergeben der ONU (10) zum Betrieb für den Downstreamdatenempfang von Datenframes (200) im zweiten Datenframestream (100).

9. ONU (10) nach einem der vorhergehenden Ansprüche, wobei jeder der Datenframes (103) des ersten Datenframestreams (102) eine Symbolsequenz und Framenutzdaten umfasst, wobei die Symbolsequenz einem physischen Downstreamsynchronisationsblock entspricht und wobei der physische Downstreamsynchronisationsblock die vorbestimmte Sequenz von Symbolen (4) umfasst.

10. ONU (10) nach einem der vorhergehenden Ansprüche, wobei die vorbestimmte Sequenz von Symbolen (4) eines von Folgendem umfasst:

- eine einzelne Sequenz eines komplementären Golay-Paares;
- eine Wiederholung einer Sequenz eines komplementären Golay-Paares;
- eine Wiederholung von beiden Sequenzen eines komplementären Golay-Paares;
- eine Verkettung von beiden Sequenzen eines komplementären Golay-Paares;
- ein Vorprodukt und/oder ein Nachprodukt einer Sequenz eines komplementären Golay-Paares;
- ein Vorprodukt und/oder ein Nachprodukt einer Verkettung von beiden Sequenzen eines komplementären Golay-Paares.

11. ONU (10) nach einem der vorhergehenden Ansprüche, wobei die Kanalschätzung (300) verwendet werden kann, um einen oder mehrere der folgenden Entzerrer zu initialisieren:

- Vorwärtskopplungsentzerrer;
- Entscheidungsrückmeldungsentzerrer;
- Maximale Wahrscheinlichkeitssequenzschätzung;
- Bahl-Cocke-Jelinek-Raviv-Entzerrer.

12. Verfahren zum Synchronisieren und Entzerren einer optischem Netzwerkeinheit (10), kurz ONU, für einen Downstreamdatenempfang in einem passiven optischen Netzwerk (1), kurz PON, eines ersten Datenframestreams (102), der von einem optischen Leitungsabschluss (2), kurz OLT, gesendet wird, wobei der erste Datenframestream (102) durch Ausbreitung vom OLT zur ONU (10) entlang eines dispersiven Kommunikationskanals (3), der im PON (1) umfasst ist, in einen zweiten Datenframestream (100) umgewandelt wird, wobei das Verfahren die folgenden Schritte umfasst:

- Verarbeiten des zweiten Datenframestreams (100), wobei der zweite Datenframestream (100) Proben (130) umfasst, die an Probenindices (111) entlang Datenframes (200) des zweiten Datenframestreams (100) positioniert sind;
- Bestimmen eines Korrelationswertes (120) zwischen einer Sequenz von Proben (400) um eine Probe mit dem Probenindex (111) und einer vorbestimmten Sequenz von Symbolen (4), die eine Framegrenze eines Datenframes (103) im ersten Datenframestream (102) anzeigen, für jeden Probenindex (111);

DADURCH GEKENNZEICHNET, DASS das Verfahren ferner die folgenden Schritte umfasst:

- in einem ersten Zustand Identifizieren eines Probenindex (111), der einem Korrelationswert (120) mit einem größten Absolutwert entspricht, dadurch:

  o Detektieren von Framegrenzen (201) der Datenframes (200) im zweiten Datenframestream (100) und dadurch Synchronisieren der ONU (10) mit dem OLT (2); und
  o Schätzen des Koeffizienten mit einem größten Absolutwert einer Kanalimpulsantwort des dispersiven Kommunikationskanals (3) und dadurch Bereitstellen einer Kanalschätzung (300) des dispersiven Kommunikationskanals (3); und

- in einem zweiten Zustand, wenn die ONU (10) mit dem OLT (2) synchronisiert ist und wenn die Kanalschätzung (300) bereitgestellt ist, Auslegen eines Entzerrers (15) gemäß der Kanalschätzung (300) für den Downstreamdatenempfang.

13. Verfahren nach Anspruch 12, wobei das Verfahren ferner die folgenden Schritte umfasst:

- Teilen des Datenframestreams (100) in einen oder mehrere Sätze von Proben (110), wobei jeder Satz von Proben (110) eine vorbestimmte Datenframelänge (210) aufweist;
- Definieren eines Satzes von Probenindices (112) in jedem des einen oder der mehreren Sätze von Proben (110), wobei die Sätze von Probenindices (112) über den einen oder die mehreren Sätze von Proben (110) alle Probenindices eines Datenframes (200) umfassen; und
- für jede des Satzes von Proben (110) Bestimmen eines Korrelationswertes (120) zwischen der Sequenz von Proben (400) um eine Probe mit dem Probenindex (111) des Satzes von Proben (110) und der vorbestimmten Sequenz von Symbolen (4) für jeden Probenindex (111) im entsprechenden Satz von Probenindices (112) .

**14.** Computerprogrammprodukt, das computerausführbare Anweisungen zum Veranlassen einer optischen Netzwerkeinheit (10), kurz ONU, die folgenden Schritte durchzuführen, umfasst, wenn das Programm auf einem Computer zum Synchronisieren und Entzerren der ONU (10) für einen Downstreamdatenempfang in einem passiven optischen Netzwerk (1), kurz PON, eines ersten Datenframestreams (102), der von einem optischen Leitungsabschluss (2), kurz OLT, gesendet wird, läuft, wobei der erste Datenframestream (102) durch Ausbreitung vom OLT zur ONU (10) entlang eines dispersiven Kommunikationskanals (3), der im PON (1) umfasst ist, in einen zweiten Datenframestream (100) umgewandelt wird:

- Verarbeiten des zweiten Datenframestreams (100), wobei der zweite Datenframestream (100) Proben (130) umfasst, die an Probenindices (111) entlang Datenframes (200) des zweiten Datenframestreams (100) positioniert sind;
- Bestimmen eines Korrelationswertes (120) zwischen einer Sequenz von Proben (400) um eine Probe mit dem Probenindex (111) und einer vorbestimmten Sequenz von Symbolen (4), die eine Framegrenze eines Datenframes (103) im ersten Datenframestream (102) anzeigen, für jeden Probenindex (111);

**DADURCH GEKENNZEICHNET, DASS** die computerausführbaren Anweisungen die ONU (10) veranlassen, ferner mindestens Folgendes durchzuführen:

- in einem ersten Zustand Identifizieren eines Probenindex (111), der einem Korrelationswert (120) mit einem größten Absolutwert entspricht, dadurch:

o Detektieren von Framegrenzen (201) der Datenframes (200) im zweiten Datenframestream (100) und dadurch Synchronisieren der ONU (10) mit dem OLT (2); und
o Schätzen des Koeffizienten mit einem größten Absolutwert einer Kanalimpulsantwort des dispersiven Kommunikationskanals (3) und dadurch Bereitstellen einer Kanalschätzung (300) des dispersiven Kommunikationskanals (3); und

- in einem zweiten Zustand, wenn die ONU (10) mit dem OLT (2) synchronisiert ist und wenn die Kanalschätzung (300) bereitgestellt ist, Auslegen eines Entzerrers (15) gemäß der Kanalschätzung (300) für den Downstreamdatenempfang.

**15.** Computerlesbares Speichermedium, das computerausführbare Anweisungen zum Durchführen der folgenden Schritte umfasst, wenn das Programm auf einem Computer zum Synchronisieren und Entzerren einer optischen Netzwerkeinheit (10), kurz ONU, für einen Downstreamdatenempfang in einem passiven optischen Netzwerk (1), kurz PON, eines ersten Datenframestreams (102), der von einem optischen Leitungsabschluss (2), kurz OLT, gesendet wird, läuft, wobei der erste Datenframestream (102) durch Ausbreitung vom OLT zur ONU (10) entlang eines dispersiven Kommunikationskanals (3), der im PON (1) umfasst ist, in einen zweiten Datenframestream (100) umgewandelt wird:

- Verarbeiten des zweiten Datenframestreams (100), wobei der zweite Datenframestream (100) Proben (130) umfasst, die an Probenindices (111) entlang Datenframes (200) des zweiten Datenframestreams (100) positioniert sind;
- Bestimmen eines Korrelationswertes (120) zwischen einer Sequenz von Proben (400) um eine Probe mit dem Probenindex (111) und einer vorbestimmten Sequenz von Symbolen (4), die eine Framegrenze eines Datenframes (103) im ersten Datenframestream (102) anzeigen, für jeden Probenindex (111);

**DADURCH GEKENNZEICHNET IST, DASS** die computerausführbaren Anweisungen das Durchführen der weiteren folgenden Schritte veranlassen:

- in einem ersten Zustand Identifizieren eines Probenindex (111), der einem Korrelationswert (120) mit einem größten Absolutwert entspricht, dadurch:

    o Detektieren von Framegrenzen (201) der Datenframes (200) im zweiten Datenframestream (100) und dadurch Synchronisieren der ONU (10) mit dem OLT (2); und
    o Schätzen des Koeffizienten mit einem größten Absolutwert einer Kanalimpulsantwort des dispersiven Kommunikationskanals (3) und dadurch Bereitstellen einer Kanalschätzung (300) des dispersiven Kommunikationskanals (3); und

- in einem zweiten Zustand, wenn die ONU (10) mit dem OLT (2) synchronisiert ist und wenn die Kanalschätzung (300) bereitgestellt ist, Auslegen eines Entzerrers (15) gemäß der Kanalschätzung (300) für den Downstreamdatenempfang.

**Revendications**

1. Unité de réseau optique (10), abrégée ONU, pour la réception de données en aval dans un réseau optique passif (1), abrégé PON, d'un premier flux de trames de données (102) envoyé par une terminaison de ligne optique (2), abrégée OLT, dans laquelle ledit premier flux de trames de données (102) est converti en un deuxième flux de trames de données (100) par propagation de ladite OLT vers ladite ONU (10) le long d'un canal de communication dispersif (3) compris dans ledit PON (1), dans laquelle ladite ONU (10) comprend :

    - un récepteur (11) configuré pour traiter ledit deuxième flux de trames de données (100), dans laquelle ledit deuxième flux de trames de données (100) comprend des échantillons (130) positionnés sur des indices d'échantillons (111) le long de trames de données (200) dudit deuxième flux de trames de données (100) ;
    - une unité de détermination de corrélation (12) configurée pour déterminer, pour chaque indice d'échantillon (111), une valeur de corrélation (120) entre une séquence d'échantillons (400) autour d'un échantillon avec ledit indice d'échantillon (111) et une séquence prédéterminée de symboles (4) indiquant une limite de trame d'une trame de données (103) dans ledit premier flux de trames de données (102) ;

**caractérisée en ce que** ladite ONU (10) comprend en outre :

    - une unité de recherche de ligne (13) configurée pour identifier un indice d'échantillon (111) correspondant à une valeur de corrélation (120) ayant la plus grande valeur absolue, de ce fait :

        o détectant les limites de trame (201) desdites trames de données (200) dans ledit deuxième flux de trames de données (100), et synchronisant ainsi ladite ONU (10) avec ladite OLT (2) ; et
        o estimant le coefficient ayant la plus grande valeur absolue d'une réponse impulsionnelle de canal dudit canal de communication dispersif (3), et fournissant ainsi une estimation de canal (300) dudit canal de communication dispersif (3) ; et

    - une unité d'entraînement (14) configurée pour, lorsque ladite unité de recherche de ligne (13) synchronise ladite ONU (10) avec ladite OLT (2) et lorsque ladite unité d'entraînement (14) reçoit ladite estimation de canal (300) de ladite unité de recherche de ligne (13), configurer un égaliseur (15) suivant ladite estimation de canal (300) pour ladite réception de données en aval.

2. ONU (10) selon la revendication 1, dans laquelle ladite ONU (10) comprend en outre une unité de division (16) configurée pour diviser ledit deuxième flux de trames de données (100) en un ou plusieurs ensembles d'échantillons (110), dans laquelle chaque ensemble d'échantillons (110) est d'une longueur de trame de données (210) prédéterminée ;
et dans laquelle ladite unité de détermination de corrélation (12) est en outre configurée pour :

    - dans chacun desdits un ou plusieurs ensembles d'échantillons (110), définir un ensemble d'indices d'échantillons (112), dans laquelle les ensembles d'indices d'échantillons (112) sur lesdits un ou plusieurs ensembles d'échantillons (110) comprennent tous les indices d'échantillons d'une trame de données (200) ; et
    - pour chacun dudit ensemble d'échantillons (110), déterminer, pour chaque indice d'échantillon (111) de l'ensemble d'indices d'échantillons (112) correspondant, une valeur de corrélation (120) entre ladite séquence d'échantillons (400) autour d'un échantillon avec ledit indice d'échantillon (111) dudit ensemble d'échantillons (110) et ladite séquence prédéterminée de symboles (4).

3. ONU (10) selon la revendication 2, dans laquelle ladite unité de détermination de corrélation (12) est en outre configurée pour :

- identifier des pics de corrélation (121) parmi les valeurs absolues desdites valeurs de corrélation (120) ; et
- stocker les valeurs de corrélation (120) auxdits pics de corrélation (121) et/ou stocker les indices d'échantillons (111) correspondant auxdits pics de corrélation (121).

4. ONU (10) selon la revendication 3, dans laquelle ladite unité de détermination de corrélation (12) est en outre configurée pour :

- pour un ensemble d'échantillons (110), déterminer une valeur de corrélation (120) entre ladite séquence d'échantillons (400) dans ledit ensemble d'échantillons (110) ultérieur et ladite séquence prédéterminée de symboles (4) uniquement pour les indices d'échantillons (111) correspondant auxdits pics de corrélation (121) ; et
- stocker lesdites valeurs de corrélation (120) pour ledit ensemble d'échantillons (110) ultérieur.

5. ONU (10) selon l'une quelconque des revendications 2 à 4, dans laquelle ladite unité de détermination de corrélation (12) est en outre configurée pour faire la moyenne, pour lesdits pics de corrélation (121), desdites valeurs de corrélation (120) déterminées sur lesdits ensembles d'échantillons (110) ; et dans laquelle ladite unité de recherche de ligne (13) est en outre configurée pour identifier un indice d'échantillon (111) d'une valeur de corrélation moyennée ayant la plus grande valeur absolue, détectant ainsi les limites de trame (201) de trames de données (200) dans ledit deuxième flux de trames de données (100), et synchronisant ainsi ladite ONU (10) avec ladite OLT (2).

6. ONU (10) selon l'une quelconque des revendications précédentes, dans laquelle ladite valeur de corrélation (120) ayant la plus grande valeur absolue est une estimation dudit plus grand coefficient de ladite réponse impulsionnelle de canal dudit canal de communication dispersif (3) ; et dans laquelle des valeurs de corrélation (120) dans des indices d'échantillons (111) voisins dudit indice d'échantillon (111) correspondant à ladite valeur de corrélation (120) ayant la plus grande valeur absolue fournissent une estimation d'autres coefficients de ladite réponse impulsionnelle de canal dudit canal de communication dispersif (3).

7. ONU (10) selon l'une quelconque des revendications précédentes, dans laquelle ladite unité de détermination de corrélation (12) est en outre configurée pour déterminer ladite valeur de corrélation (120) correspondant à un indice d'échantillon (111) :

- en déterminant un ensemble de valeurs en multipliant des échantillons (130) de ladite séquence d'échantillons (400) avec des symboles correspondants de ladite séquence prédéterminée de symboles (4) ; et
- en faisant la somme dudit ensemble de valeurs, déterminant ainsi ladite valeur de corrélation (120) correspondant audit indice d'échantillon (111).

8. ONU (10) selon l'une quelconque des revendications précédentes, dans laquelle ladite unité d'entraînement (14) est en outre configurée pour :

- déterminer des coefficients d'égaliseur de canal à partir de ladite estimation de canal pour configurer ledit égaliseur (15) ;
- mettre à jour ledit égaliseur (15) à l'aide d'un procédé d'entraînement ;
- faire passer ladite ONU (10) en fonctionnement pour ladite réception de données en aval de trames de données (200) dans ledit deuxième flux de trames de données (100).

9. ONU (10) selon l'une quelconque des revendications précédentes, dans laquelle chacune desdites trames de données (103) dudit premier flux de trames de données (102) comprend une séquence de symboles et une charge utile de trame, dans laquelle ladite séquence de symboles correspond à un bloc de synchronisation physique en aval, et dans laquelle ledit bloc de synchronisation physique en aval comprend ladite séquence prédéterminée de symboles (4).

10. ONU (10) selon l'une quelconque des revendications précédentes, dans laquelle ladite séquence prédéterminée de symboles (4) comprend l'un des éléments suivants :

- une séquence unique d'une paire de Golay complémentaire ;
- une répétition d'une séquence d'une paire de Golay complémentaire ;
- une répétition des deux séquences d'une paire de Golay complémentaire ;
- une concaténation des deux séquences d'une paire de Golay complémentaire ;
- un précurseur et/ou un postcurseur à une séquence d'une paire de Golay complémentaire ;
- un précurseur et/ou un postcurseur à une concaténation des deux séquences d'une paire de Golay complémentaire.

**11.** ONU (10) selon l'une quelconque des revendications précédentes, dans laquelle ladite estimation de canal (300) peut être utilisée pour initialiser un ou plusieurs des égaliseurs suivants :

- un égaliseur à action directe ;
- un égaliseur de rétroaction de décision ;
- une estimation des séquences par le maximum de vraisemblance ;
- un égaliseur Bahl-Cocke-Jelinek-Raviv.

**12.** Procédé pour synchroniser et égaliser une unité de réseau optique (10), abrégée ONU, pour la réception de données en aval dans un réseau optique passif (1), abrégé PON, d'un premier flux de trames de données (102) envoyé par une terminaison de ligne optique (2), abrégée OLT, dans lequel ledit premier flux de trames de données (102) est converti en un deuxième flux de trames de données (100) par propagation de ladite OLT vers ladite ONU (10) le long d'un canal de communication dispersif (3) compris dans ledit PON (1), dans lequel ledit procédé comprend les étapes suivantes :

- traiter ledit deuxième flux de trames de données (100), dans lequel ledit deuxième flux de trames de données (100) comprend des échantillons (130) positionnés sur des indices d'échantillons (111) le long de trames de données (200) dudit deuxième flux de trames de données (100) ;
- déterminer, pour chaque indice d'échantillon (111), une valeur de corrélation (120) entre une séquence d'échantillons (400) autour d'un échantillon avec ledit indice d'échantillon (111) et une séquence prédéterminée de symboles (4) indiquant une limite de trame d'une trame de données (103) dans ledit premier flux de trames de données (102) ;

**caractérisé en ce que** ledit procédé comprend en outre les étapes suivantes :

- dans un premier état, identifier un indice d'échantillon (111) correspondant à une valeur de corrélation (120) ayant la plus grande valeur absolue, de ce fait :

  o détectant les limites de trame (201) desdites trames de données (200) dans ledit deuxième flux de trames de données (100), et synchronisant ainsi ladite ONU (10) avec ladite OLT (2) ; et
  o estimant le coefficient ayant la plus grande valeur absolue d'une réponse impulsionnelle de canal dudit canal de communication dispersif (3), et fournissant ainsi une estimation de canal (300) dudit canal de communication dispersif (3) ; et

- dans un deuxième état, lorsque ladite ONU (10) est synchronisée avec ladite OLT (2) et lorsque ladite estimation de canal (300) est fournie, configurer un égaliseur (15) suivant ladite estimation de canal (300) pour ladite réception de données en aval.

**13.** Procédé selon la revendication 12, dans lequel ledit procédé comprend en outre les étapes suivantes :

- diviser ledit flux de trames de données (100) en un ou plusieurs ensembles d'échantillons (110), dans lequel chaque ensemble d'échantillons (110) est d'une longueur de trame de données (210) prédéterminée ;
- dans chacun desdits un ou plusieurs ensembles d'échantillons (110), définir un ensemble d'indices d'échantillons (112), dans lequel les ensembles d'indices d'échantillons (112) sur lesdits un ou plusieurs ensembles d'échantillons (110) comprennent tous les indices d'échantillons d'une trame de données (200) ; et
- pour chacun dudit ensemble d'échantillons (110), déterminer, pour chaque indice d'échantillon (111) de l'ensemble d'indices d'échantillons (112) correspondant, une valeur de corrélation (120) entre ladite séquence d'échantillons (400) autour d'un échantillon avec ledit indice d'échantillon (111) dudit ensemble d'échantillons (110) et ladite séquence prédéterminée de symboles (4).

**14.** Produit de programme informatique comprenant des instructions exécutables par ordinateur pour amener une unité de réseau optique (10), abrégée ONU, à effectuer les étapes suivantes lorsque le programme est exécuté sur un ordinateur pour synchroniser et égaliser ladite ONU (10), pour la réception de données en aval dans un réseau optique passif (1), abrégé PON, d'un premier flux de trames de données (102) envoyé par une terminaison de ligne optique (2), abrégée OLT, dans lequel ledit premier flux de trames de données (102) est converti en un deuxième flux de trames de données (100) par propagation de ladite OLT vers ladite ONU (10) le long d'un canal de communication dispersif (3) compris dans ledit PON (1) :

- traiter ledit deuxième flux de trames de données (100), dans lequel ledit deuxième flux de trames de données (100) comprend des échantillons (130) positionnés sur des indices d'échantillons (111) le long de trames de données (200) dudit deuxième flux de trames de données (100) ;
- déterminer, pour chaque indice d'échantillon (111), une valeur de corrélation (120) entre une séquence d'échantillons (400) autour d'un échantillon avec ledit indice d'échantillon (111) et une séquence prédéterminée de symboles (4) indiquant une limite de trame d'une trame de données (103) dans ledit premier flux de trames de données (102) ;

**caractérisé en ce que** lesdites instructions exécutables par ordinateur amènent ladite ONU (10) à effectuer en outre au moins ce qui suit :

- dans un premier état, identifier un indice d'échantillon (111) correspondant à une valeur de corrélation (120) ayant la plus grande valeur absolue, de ce fait :

   o détectant les limites de trame (201) desdites trames de données (200) dans ledit deuxième flux de trames de données (100), et synchronisant ainsi ladite ONU (10) avec ladite OLT (2) ; et
   o estimant le coefficient ayant la plus grande valeur absolue d'une réponse impulsionnelle de canal dudit canal de communication dispersif (3), et fournissant ainsi une estimation de canal (300) dudit canal de communication dispersif (3) ; et

- dans un deuxième état, lorsque ladite ONU (10) est synchronisée avec ladite OLT (2) et lorsque ladite estimation de canal (300) est fournie, configurer un égaliseur (15) suivant ladite estimation de canal (300) pour ladite réception de données en aval.

**15.** Support de stockage lisible par ordinateur comprenant des instructions exécutables par ordinateur pour effectuer les étapes suivantes lorsque le programme est exécuté sur un ordinateur pour synchroniser et égaliser une unité de réseau optique (10), abrégée ONU, pour la réception de données en aval dans un réseau optique passif (1), abrégé PON, d'un premier flux de trames de données (102) envoyé par une terminaison de ligne optique (2), abrégée OLT, dans lequel ledit premier flux de trames de données (102) est converti en un deuxième flux de trames de données (100) par propagation de ladite OLT vers ladite ONU (10) le long d'un canal de communication dispersif (3) compris dans ledit PON (1) :

- traiter ledit deuxième flux de trames de données (100), dans lequel ledit deuxième flux de trames de données (100) comprend des échantillons (130) positionnés sur des indices d'échantillons (111) le long de trames de données (200) dudit deuxième flux de trames de données (100) ;
- déterminer, pour chaque indice d'échantillon (111), une valeur de corrélation (120) entre une séquence d'échantillons (400) autour d'un échantillon avec ledit indice d'échantillon (111) et une séquence prédéterminée de symboles (4) indiquant une limite de trame d'une trame de données (103) dans ledit premier flux de trames de données (102) ;

**caractérisé en ce que** lesdites instructions exécutables par ordinateur provoquent la réalisation des étapes supplémentaires suivantes :

- dans un premier état, identifier un indice d'échantillon (111) correspondant à une valeur de corrélation (120) ayant la plus grande valeur absolue, de ce fait :

   o détectant les limites de trame (201) desdites trames de données (200) dans ledit deuxième flux de trames de données (100), et synchronisant ainsi ladite ONU (10) avec ladite OLT (2) ; et
   o estimant le coefficient ayant la plus grande valeur absolue d'une réponse impulsionnelle de canal dudit canal de communication dispersif (3), et fournissant ainsi une estimation de canal (300) dudit canal de communication dispersif (3) ; et

- dans un deuxième état, lorsque ladite ONU (10) est synchronisée avec ladite OLT (2) et lorsque ladite estimation de canal (300) est fournie, configurer un égaliseur (15) suivant ladite estimation de canal (300) pour ladite réception de données en aval.

Fig. 1B

Fig. 1A (PRIOR ART)

Fig. 2

Fig. 3A

EP 3 913 875 B1

Fig. 3B

EP 3 913 875 B1

Fig. 3C

Fig. 3D

EP 3 913 875 B1

Fig. 4

Fig. 5

EP 3 913 875 B1

36

## REFERENCES CITED IN THE DESCRIPTION

**Patent documents cited in the description**

- US 20140056583 A
- CN 110048983

- US 20160006510 A

**Non-patent literature cited in the description**

- **S.Z. BUDISIN.** Efficient Pulse Compressor for Golay Complementary Sequences. *Electronics Letters publication,* 03 January 1990, vol. 27